# EUROPÄISCHE PATENTSCHRIFT

(11) **EP 4 188 172 B1**
(45) Veröffentlichungstag und Bekanntmachung des Hinweises auf die Patenterteilung: **07.05.2025**
(21) Anmeldenummer: 21766105.7
(22) Anmeldetag: 30.07.2021
(51) Int. Cl.: A47J 44/00, A47J 43/046

(54) **VORRICHTUNG UND VERFAHREN ZUM AUTOMATISIERTEN ZUBEREITEN VON NAHRUNGSMITTELN**
DEVICE AND METHOD FOR THE AUTOMATED PREPARATION OF FOODS
DISPOSITIF ET PROCÉDÉ DE PRÉPARATION AUTOMATISÉE D'ALIMENTS

(30) Priorität: 31.07.2020 DE 202020003300 U; 05.02.2021 DE 202021000446 U
(43) Veröffentlichungstag der Anmeldung: 07.06.2023
(73) Patentinhaber: Circus Robotics GmbH, 20457 Hamburg (DE)
(72) Erfinder: PALLUA, Emanuel, 10781 Berlin (DE); STOß, Julian, 10405 Berlin (DE); PUPILLO, Marco, 81375 München (DE); BERGHOFER, Jakob, 80801 München (DE); STIEPEL, Paul, 86163 Augsburg (DE); DELL, Dimitri, 86199 Augsburg (DE); SCHARRER, Johannes, 86153 Augsburg (DE)
(74) Vertreter: Richardt Patentanwälte PartG mbB
(86) Internationale Anmeldenummer: PCT/DE2021/000130
(87) Internationale Veröffentlichungsnummer: WO 2022/022764

(56) Entgegenhaltungen:
- EP-A1- 2 572 614
- WO-A1-2017/055832
- WO-A1-95/20903
- US-A1- 2015 114 236
- US-A1- 2020 037 824
- US-B1- 6 817 750

## Beschreibung

Die Erfindung betrifft eine Vorrichtung und ein Verfahren zum automatisierten Zubereiten von Nahrungsmitteln.

Aus der Druckschrift WO 2018/133861 A1 ist ein System bekannt, welches Zutaten für Speisen lagert, computergesteuert einem Kochprozess zuführt und danach die gekochte Speise verpackt. Aus der WO 2019/123472 A1 ist ein prozessorgesteuertes System bekannt, wobei Spender für Zutaten, ein Karussellförderer, eine Rührvorrichtung, ein Erhitzer und eine Anzeige miteinander über den Prozessor verbunden sind.

Die Druckschrift WO 95/20903 A1 offenbart eine Küchenmaschine zum Zubereiten von Nahrungsmitteln mit einem Gehäuse, einer auf das Gehäuse stellbaren und gegenüber dem Gehäuse drehbar geführten Schale, und einem Ausleger, der gegenüber dem Gehäuse verlagerbar ist, wobei in der Schale ein Werkzeug vorgesehen werden kann, das mit einem in dem Ausleger vorgesehenen und mit Hilfe eines Elektromotors antreibbaren Getriebe kuppelbar ist, während die Schale mittels eines Ritzes antreibbar ist, das durch den Elektromotor antreibbar ist und mit einem Umfang der Schale zusammenarbeitet.

Es ist eine Aufgabe der Erfindung eine Vorrichtung und ein Verfahren bereitzustellen, welche in der Lage ist, in verbesserter Weise Nahrungsmittel automatisch zuzubereiten. Diese Aufgabe wird durch die Vorrichtung mit den Merkmalen des Anspruchs 1 und ein Verfahren mit den Merkmalen des Anspruchs 10 gelöst. Bevorzugte Ausführungsformen sind in den Unteransprüchen definiert.

### Aspekte der Erfindung

Ein Aspekt der Erfindung betrifft eine Vorrichtung zum automatisierten Zubereiten von Nahrungsmitteln mit den Merkmalen des Anspruchs 1, wobei die Vorrichtung zumindest eines der folgenden Merkmale aufweist:
- zumindest ein Aufbewahrungsbehälter, welcher ausgelegt ist, um ein Nahrungsmittel aufzubewahren;
- zumindest eine Spendereinrichtung, welche ausgelegt ist, um ein Nahrungsmittel aus einem der Aufbewahrungsbehälter zu fördern;
- zumindest ein Zubereitungsgefäß, welches ausgelegt ist, zumindest ein Nahrungsmittel aufzunehmen;
- zumindest eine Mischeinrichtung, welche ausgelegt ist, den Inhalt des Zubereitungsgefäßes zu durchmischen;
- zumindest eine Heizeinrichtung, welche ausgelegt ist, den Inhalt des Zubereitungsgefäßes zu erhitzen;
- zumindest ein Manipulator, welcher ausgelegt ist, das zumindest eine Zubereitungsgefäß zu handhaben;
- zumindest eine Übergabestation, in welcher der Inhalt des Zubereitungsgefäßes einem Serviergefäß übergeben wird;
- zumindest ein Manipulator, welcher ausgelegt ist, dass zumindest eine Serviergefäß zu handhaben;
- zumindest eine Ausgabestation, in welcher das Serviergefäß aus der Vorrichtung ausgegeben wird;
- zumindest Temperiereinrichtung, welche das Innere der Vorrichtung oder Teile davon zumindest bereichsweise auf einer vorbestimmten Temperatur hält;
- zumindest Hygieneeinrichtung, welche das Innere der Vorrichtung oder Teile davon zumindest bereichsweise reinigt;
- zumindest eine Steuereinrichtung, welche zumindest eine der Komponenten steuert bzw. regelt, um die Zubereitung durchzuführen;
- zumindest eine Kommunikationseinrichtung, welche ausgelegt ist, die Steuereinrichtung mit einem Benutzer oder einer übergeordneten Steuerung kommunikativ zu verbinden.

Vorteilhafterweise kann das Bedürfnis in schneller und flexibler Weise Nahrungsmittel, insbesondere auf Nutzerwunsch, verzehrfertig frisch zuzubereiten erfüllt werden. Dabei ist die Vorrichtung vorteilhafterweise in wesentlichen kompakt, mobil und/oder autark ausgebildet, so dass die Vorrichtung in einfacher Weise an einem Standort verbracht und aufgestellt werden kann, ohne dass ein Eingriff in die Umgebung oder die umgebende Bausubstanz erforderlich ist.

Die Vorrichtung kann durch eine Wandung zumindest teilweise eingeschlossen bzw. begrenzt sein. Bevorzugt ist die Wandung vollständig geschlossen bzw. verschließbar. Durch die Wandung kann das Innere der Vorrichtung von einer äußeren Umgebung getrennt werden. Durch die Trennung kann bevorzugt ein Eingreifen eines Nutzers von der äußeren Umgebung in das Innere der Vorrichtung unterbunden werden. Ferner kann der Austausch von Feststoffen, Staub, Flüssigkeiten, Gasen, Aerosolen und/oder Fluiden zwischen Innerem und der Umgebung verhindert werden. Vorteilhafterweise kann dadurch eine Verunreinigung bzw. Kontamination des Inneren der Vorrichtung durch Stoffe aus der Umgebung wie umgekehrt auch eine Belastung der Umgebung durch Stoffe aus der Vorrichtung vermieden werden. Weiter vorteilhafterweise kann das Innere der Vorrichtung durch die Wandung thermisch entkoppelt werden. So können die Temperatur im Inneren der Vorrichtung und die Temperatur in der Umgebung der Vorrichtung voneinander verschieden sein. Bevorzugt kann Temperatur im Inneren der Vorrichtung um mehr als etwa 5 Grad Celsius, bevorzugt um mehr als etwa 10 Grad Celsius kälter sein als die Umgebungstemperatur der Vorrichtung.

Es versteht sich, dass zum Betrieb der Vorrichtung Elektrizität und Frischwasser zugeführt sowie Abwasser abgeführt werden können sollte. Daher ist die Wandung der Vorrichtung zweckmäßigerweise mit Anschlüssen für Elektrizität, Frischwasser und Abwasser versehen. Alternativ oder zusätzlich ist es möglich Frischwasser und Abwasser in Tanks innerhalb der Vorrichtung zu lagern bzw. zumindest zwischenzulagern, um einen zumindest zeitweisen autarken Betrieb der Vorrichtung zu ermöglichen. Elektrische Energie kann ebenfalls alternativ oder zusätzlich innerhalb der Vorrichtung gespeichert sein oder erzeugt werden, beispielsweise durch Akkumulatoren, Brennstoffzellen, Solarzellen oder einen diesel-, benzin-, oder gasbetriebenen Generator. Alternativ oder zusätzliche kann die zum Heizen oder Kühlen benötigte Energie auch durch Gas, insbesondere in einem Gastank oder zumindest einer Gasflasche bereitgestelltem Propan, erzeugt werden. Entsprechend kann in der Wandung auch zumindest eine Vorrichtung zum Ausstoß von Abgasen vorgesehen sein.

Es versteht sich weiter, dass verschließbare Öffnungen in der Wandung vorgesehen sein können, um einen Zugriff in das Innere der Vorrichtung temporär zu ermöglichen. Beispielsweise kann zumindest eine Klappe, zumindest eine Türe, zumindest eine Schublade und/oder zumindest ein Auszug in der Wandung ausgebildet bzw. angeordnet sein. Diese Öffnungen sind bevorzugt durch entsprechende Verriegelungen vor einem unbefugten Öffnen gesichert, beispielsweise durch Verschraubungen, Drehriegel, Schlösser, etc., wobei die Verriegelung insbesondere nur durch ein spezielles Werkzeug, einen Schlüssel oder durch ein biometrisches und/oder elektronisches Signal entriegelbar sind.

Die Wandung kann auch bereichsweise transparent ausgebildet sein. Insbesondere kann ein Fenster vorgesehen sein, durch welches ein Benutzer die Zubereitung verfolgen kann. Aufgrund der bevorzugten thermischen Entkopplung kann das Fenster bevorzugt mit doppelter oder dreifacher, insbesondere entspiegelter bzw. vergüteter bzw. getönter, Verglasung ausgeführt sein. Weiter bevorzugt ist die transparente Wandung bzw. das Fenster undurchlässig gegenüber ultravioletter und/oder infraroter Strahlung (UV/IR-Strahlung) ausgebildet. Dies kann vorteilhafterweise eine Erwärmung des Inneren der Vorrichtung oder eine andere Beeinflussung des Inneren bzw. der dort befindlichen Nahrungsmittel durch Sonneneinstrahlung vermindern bzw. verhindern.

Des Weiteren können verschiedene Lichtquellen oder Anzeigen im Inneren der Vorrichtung vorgesehen sein, welche unterschiedliche Zustände der Vorrichtung, wie beispielsweise den Status der Zubereitung einer Speise anzeigen können, welche in verschiedenen Situationen (Tageszeiten, Jahreszeiten) unterschiedliche Lichtstimmungen/-färbungen realisieren können oder welche, insbesondere als Anzeige (beispielsweise als Bildschirm), Informationen darstellen können. Dazu kann eine großflächige Anzeige insbesondere an der hinteren Wandung des Inneren der Vorrichtung derart angeordnet sein, dass ein Benutzer eine vollständige Sicht auf diese Anzeige hat.

Die durch die Wandung vorgegebenen Dimensionen der Vorrichtung sind vorzugsweise derart, das die Vorrichtung kleiner ist als ein 20-Fuß-Standard-Container. Insbesondere ist die Länge der Vorrichtung kleiner oder gleich 6,095m. Insbesondere ist die Breite der Vorrichtung kleiner oder gleich 2,352m. Insbesondere ist die Höhe der Vorrichtung kleiner oder gleich 2,393 m. Das Gewicht der Vorrichtung sollte entsprechend kleiner oder gleich etwa 28 t bevorzugt kleiner als 22 t sein, so dass die Vorrichtung vorteilhafterweise wie ein Container in einfacher Weise transportiert werden kann. Besonders bevorzugt ist die Vorrichtung etwa 4 m lang, etwa 2 m breit und etwa 2 m hoch wobei das Gewicht kleiner als etwa 6 t, insbesondere kleiner als etwa 5 t ist.

Bevorzugt ist die Vorrichtung für den Transport bzw. die Aufstellung am Betriebsort in Module zerlegbar, die eine Breite von etwa 1 m und/oder eine Höhe von etwa 1,95 m nicht überschreiten. Die einzelnen Module können bevorzugt mittels Schnellverschlüsse mechanisch und/oder elektrisch und/oder fluidisch miteinander verbunden werden. Mit anderen Worten erlaubt ein solcher Schnellverschluß, insbesondere werkzeuglos, eine zuverlässige mechanische Verbindung zwischen den Modulen, beispielsweise dadurch dass ein Verschlusselement mit einem komplementären Verschusselement in Verbindung gebracht und optional durch Spannen bzw. Verriegeln miteinander, insbesondere lösbar, sicher verbunden wird. Es kann optional zumindest ein elektrischer Verbinder an einem Modul vorgesehen sein, der mit einem zugeordneten komplementären elektrischen Verbinder eines anderen Moduls elektrisch kontaktiert, wenn eine mechanische Verbindung zwischen den Modulen erfolgt. Vorteilhafterweise kann derart eine elektrische Verbindung zur Stromversorgung und/oder zur Übertragung elektrischer (Steuerungs-)Signale in einfacher Weise erfolgen. Es kann weiter optional zumindest ein fluidischer Verbinder an einem Modul vorgesehen sein, der mit einem zugeordneten komplementären fluidischen Verbinder eines anderen Moduls fluidisch kontaktiert, wenn eine mechanische Verbindung zwischen den Modulen erfolgt. Vorteilhafterweise kann derart eine fluidische Verbindung zur Versorgung mit einem Fluid und/oder Entsorgung eines Fluid in einfacher Weise erfolgen. Ein Fluid im Sinne der Anmeldung ist eine Flüssigkeit, ein Gas oder ein Flüssigkeits-Gas-Gemisch.

Die einzelnen Module, aus welchen die Vorrichtung zusammensetzbar ist, können im wesentlichen quaderförmig ausgebildet sein, so dass sich eine im Wesentlichen quaderförmige Vorrichtung ergibt. Die Module können aber auch die Form von Zylindern, sechseckigen Prismen, achteckigen Prismen, Zylindersegmenten oder ähnliches aufweisen. Dadurch können Vorrichtungen in unterschiedlichen Formen modular ausgebildet werden.

Die Vorrichtung kann zumindest einen Aufbewahrungsbehälter aufweisen, welcher ausgelegt ist, um ein Nahrungsmittel aufzubewahren. Das zumindest eine Nahrungsmittel kann in flüssiger, fester, pastöser, pulverförmiger, trockener, gemahlener, körniger, granularer bzw. stückiger Form oder Gemischen davon vorliegen. Das Nahrungsmittel kann dabei roh, bereits vorgegart oder servierfertig in dem Aufbewahrungsbehälter gelagert sein. Der Aufbewahrungsbehälter kann eine lebensmittelechte innere Fläche aufweisen oder vollständig aus lebensmittelechtem Material ausgebildet sein. Im oder am Aufbewahrungsbehälter kann ein Füllstandsensor angeordnet sein, welcher Daten zum Füllstand des Aufbewahrungsbehälters bereitstellt. Bei dem Sensor kann es sich beispielsweise um eine Wägezelle, einen Pegelsensor, einen Füllhöhensensor, einen Drucksensor oder ähnliches handeln. Der Aufbewahrungsbehälter hat zweckmäßigerweise einen Auslass, wobei bevorzugt eine Entleerungshilfseinrichtung vorgesehen sein kann, welche im oder am Aufbewahrungsbehälter angeordnet sein kann und welcher bevorzugt hilft den Inhalt des Aufbewahrungsbehälters in Richtung des Auslasses des Aufbewahrungsbehälters zu verlagern. Dies kann durch Vibration bzw. Schütteln bzw. Rütteln bzw. Kippen des Aufbewahrungsbehälters oder dessen Inhalts erfolgen oder durch Verlagern des Inhalts mittels Schieber, Schnecke oder anderen Einrichtungen.

Die Vorrichtung kann zumindest eine Spendereinrichtung aufweisen, welche ausgelegt ist, um ein Nahrungsmittel aus einem der Aufbewahrungsbehälter zu fördern. Jede Spendereinrichtung ist bevorzugt eineindeutig einem der Aufbewahrungsbehälter zugeordnet. Eine Spendereinrichtung kann entsprechend ausgelegt sein, ein flüssiges, festes, pastöses, trockenes, pulverförmiges, gemahlenes, körniges, granulares bzw. stückiges Nahrungsmittel oder Gemische davon zu fördern. Dazu kann die zumindest eine Spendereinrichtung eine peristaltische Pumpe bzw. Schlauchpumpe, einen Schneckenförderer, einen Schaufelradförderer, einen pneumatischen Förderer, einen Saugförderer, insbesondere zur diskontinuierlichen und/oder pneumatischen Förderung von Pulvern und Granulaten, einen pneumatischen Überdruckförderer, einen Vibrationsförderer oder andere Förderer aufweisen. Die Förderer sind derart ausgelegt, dass die zugeordneten Nahrungsmittel in einer vorbestimmten Menge abgebbar sind. Beispielsweise kann der Schneckenförderer derart hinsichtlich des Schneckendurchmessers und der Steigung ausgelegt sein, eine vorbestimmte Menge eines Nahrungsmittels pro Umdrehung der Schnecke zu fördern bzw. in das Zubereitungsgefäß abzugeben. Durch die Vorgabe der zu drehenden Umdrehungen der Schnecke können Vielfache dieser Menge abgegeben bzw. gefördert werden. Ein Resolver, d.h. Sensor, der die Umdrehungen detektiert, kann die geförderte Menge kontrolliert bzw. bestimmt werden.

In gleicher Weise kann ein Schaufelradförderer vorgesehen sein, der zwei, drei, vier, fünf, sechs oder mehr Schaufeln aufweisen kann. Entsprechend kann die Menge des zu fördernden Nahrungsmittels durch die Anzahl der Umdrehungen des Schaufelrades bestimmt werden, wobei auch Bruchteile einer ganzen Umdrehung möglich sind insbesondere halbe Umdrehungen bei Schaufelrädern mit zwei, vier, sechs, acht, zehn oder mehr Schaufelrädern, insbesondere drittel Umdrehungen bei Schaufelrädern mit drei, sechs, neun oder mehr Schaufelrädern, insbesondere viertel Umdrehungen bei Schaufelrädern mit vier, acht oder mehr Schaufelrädern und so weiter.

Besonders bevorzugt ist ein Schaufelrad vorgesehen, dessen Schaufeln einen ersten Bereich und einen zweiten Bereich aufweisen, wobei der erste Bereich steifer bzw. fester ausgebildet ist als der zweite Bereich. Die Steifigkeit bzw. Festigkeit kann hinsichtlich einer Dehnung, eines Schubs, einer Biegung und/oder einer Torsion verstanden werden. Der Begriff "Steifigkeit" wird im linear-elastischen Bereich der Verformung verwendet, während der Begriff "Festigkeit" bei der plastischen Verformung verwendet wird. Die Schaufeln des Schaufelrades kann während des Gebrauchs sowohl elastisch als auch plastisch verformt werden. Bevorzugt ist der erste Bereich proximal zur Schaufelradachse angeordnet und der zweite Bereich distal relativ zum ersten Bereich. Die größere Steifigkeit bzw. Festigkeit des ersten Bereichs kann bevorzugt dadurch ausgebildet sein, dass der erste Bereich eine größere Dicke als der zweite Bereich aufweist. Alternativ oder zusätzlich kann der zweite Bereich auch Schwachstellen oder Hohlräume aufweisen. Alternativ oder zusätzlich kann der zweite Bereich auch aus einem Material ausgebildet sein, welches im Vergleich zum im ersten Bereich verwendeten Material weniger steif ist. Vorteilhafterweise kann das zu fördernde Nahrungsmittel durch diese Ausgestaltung des Schaufelrades besonders schonend gefördert werden. Ferner ist ein guter bzw. dichter Anschluss des Schaufelrades an eine Wandung in der Spendereinrichtung möglich.

Jede Spendereinrichtung kann einen zugeordneten Antrieb aufweisen, durch welchen ein Nahrungsmittel aus dem der Spendereinrichtung zugeordneten Aufbewahrungsbehälter gefördert werden kann. Der Antrieb kann als Elektromotor, bevorzugt als Drehstrommotor ausgebildet sein, wobei der Antrieb insbesondere durch einen Frequenzumrichter gespeist wird. Besonders bevorzugt sind zwei oder mehr Antriebe der Spendereinrichtungen, insbesondere alle Antriebe der Spendereinrichtungen, mit einem einzigen Frequenzumrichter nach Bedarf elektrisch verbindbar, in Abhängigkeit davon, welcher der Spendereinrichtungen aktiviert werden soll. Dadurch ist es vorteilhafterweise möglich, lediglich einen Frequenzumrichter vorzusehen, da bevorzugt nur eine Spendereinrichtung gleichzeitig betrieben werden muss.

Bevorzugt sind die Spendereinrichtung und der zugeordnete Antrieb über eine Kupplung lösbar miteinander verbunden. Besonders bevorzugt kann eine Knebelkupplung bzw. Klauenkupplung vorgesehen sein. Vorteilhafterweise kann dadurch ein Trennen von Spendereinrichtung und Antrieb durch eine lineare Verlagerung erfolgen, insbesondere durch eine lineare Verlagerung entlang einer Verlagerungsrichtung, die im Wesentlichen senkrecht zur Rotationsachse der Kupplung orientiert ist.

Es versteht sich, dass Spendereinrichtungen vorgesehen sein können, Nahrungsmittel aus den Aufbewahrungsbehältern mit oder gegen die Schwerkraft zu verlagern, in Abhängigkeit davon, ob der zugeordnete Aufbewahrungsbehälter sich oberhalb oder unterhalb des Auslasses der Spendereinrichtung befindet. Unterhalb des Auslasses der Spendereinrichtung kann eine Auffangeinrichtung angeordnet sein, welche ausgelegt ist, Reste bzw. Tropfen der Nahrungsmittel, welche unkontrolliert aus der Spendereinrichtung fallen bzw. tropfen, aufzufangen. Bevorzugt kann die Auffangeinrichtung einen Abfluss aufweisen, durch welchen die aufgefangenen Reste weggespült werden können.

Bevorzugt können zumindest ein Aufbewahrungsbehälter und die zugeordnete(n) Spendereinrichtung(en) mit oder ohne dem/den zugeordneten Antrieb(en) zu einem Spendermodul zusammengefasst sein. Für den Fall, dass die Antriebe nicht Teil des Spendermoduls sind, kann eine Kupplung zwischen den Antrieben und Spendermodul vorgesehen sein. Wie oben beschrieben kann bevorzugt eine Knebelkupplung bzw. Klauenkupplung vorgesehen sein. Vorteilhafterweise kann dadurch ein Trennen von Spendereinrichtung und Antrieb durch eine lineare Verlagerung erfolgen, insbesondere durch eine lineare Verlagerung entlang einer Verlagerungsrichtung, die im Wesentlichen senkrecht zur Rotationsachse der Kupplung orientiert ist. Da im Spendermodul aufgrund der Zusammenfassung mehrerer Spendereinrichtungen nebeneinander angeordnet sind, werden die Kupplungsteile der Spendereinrichtungen bevorzugt derart angeordnet, dass die Knebel bzw. die Klauen miteinander fluchten. Dann kann weiter vorteilhafterweise bei einer linearen Verlagerung im Wesentlichen senkrecht zur Rotationsachse der Knebel bzw. die Klaue einer Spendereinrichtung von der Klaue bzw. dem Knebel des zugeordneten Antriebs gelöst und durch die Klaue bzw. Knebel zumindest eines nicht zugeordneten Antriebs hindurch bzw. vorbei verlagert werden. Dadurch ist es vorteilhafterweise möglich, ein Spendermodul durch eine lineare Verlagerung von den zugeordneten Antrieben zu trennen und durch ein frisch gefülltes Spendermodul auszutauschen. Alternativ kann das Spendermodul ebenfalls die zugeordneten Antriebe umfassen, so dass vorteilhafterweise nur eine elektrische Verbindung zwischen der Vorrichtung und dem Spendermodul getrennt und zwischen der Vorrichtung und dem frisch gefüllten Spendermodul wiederhergestellt werden muss. Dieser Vorteil bedingt jedoch ein schwereres Spendermodul, da die Antriebe mit enthalten und somit mit ausgetauscht werden müssen, um die Vorrichtung wieder mit frischen Nahrungsmitteln zu befüllen.

Die Vorrichtung weist zumindest ein Zubereitungsgefäß auf, welches ausgelegt ist, zumindest ein Nahrungsmittel aufzunehmen. Das zumindest eine Nahrungsmittel kann mittels der zumindest einen Spendereinrichtung in das Zubereitungsgefäß gefördert werden. Ein solches Zubereitungsgefäß wird im folgenden beschrieben.

Ein nicht unter die Patentansprüche fallender Aspekt betrifft ein Zubereitungsgefäß, welches ausgelegt ist, mit einer erfindungsgemäßen Vorrichtung benutzt zu werden. Das Zubereitungsgefäß ist bevorzugt aus einem hitzebeständigen, leicht zu reinigenden und lebensmittelechten Material ausgebildet. Beispielsweise kann das Zubereitungsgefäß aus einem korrosionsfreien Metall bzw. Edelstahl ausgebildet sein. Alternativ oder zusätzlich kann das Innere des Zubereitungsgefäßes beschichtet sein, beispielsweise mit einem Polymer, bevorzugt einem PTFE - auch als Teflon bekannt.

Bevorzugt ist das Zubereitungsgefäß konisch bzw. trichterförmig ausgebildet. Dabei kann der Bereich des Zubereitungsgefäßes mit dem größeren Durchmesser ausgebildet bzw. vorgesehen sein, die Nahrungsmittel aus der zumindest einen Spendereinrichtung aufzunehmen. Vorteilhafterweise konzentriert sich der Inhalt des Zubereitungsgefäßes in dem Bereich mit dem kleineren Durchmesser. Bevorzugt ist das Zubereitungsgefäß im Wesentlichen rotationssymmetrisch um eine Rotationsachse ausgebildet, wobei die Zutaten entlang einer Richtung, die parallel zur Rotationsachse orientiert ist, einfüllbar sind. Die konusförmige Wandung des Zubereitungsgefäßes kann mit der Rotationsachse einen Winkel α einschließen, der bevorzugt etwa 30 Grad bis etwa 60 Grad beträgt. Bevorzugt weist die innere Wandung genau eine, zwei oder mehr Rippe(n) bzw. Finne(n) bzw. Schöpfrinne(n) auf, welche sich insbesondere bereichsweise radial nach innen erstreckt bzw. erstrecken. Durch eine Rotation des Zubereitungsgefäßes um die Rotationsachse kann mittels der Rippe(n) ein Durchmischen des Inhalts des Zubereitungsgefäßes erfolgen.

Vorzugsweise kann das Zubereitungsgefäß eine Codierung bzw. Markierung aufweisen, welche einen Verwendungszweck indiziert. Beispielsweise kann ein Zubereitungsgefäß, welches nur für vegane Speisen oder allergenfreie Speisen verwendet wird, in einer speziellen Farbe oder Oberflächengestaltung ausgeführt sein. Vorteilhafterweise kann damit einem Benutzer indiziert werden, da durch die Zubereitung anderer Speisen mit diesem Zubereitungsgefäß keine Kontamination mit Allergenen aus diesen anderen Speisen erfolgen kann.

Die Vorrichtung weist zumindest eine Mischeinrichtung auf, welche ausgelegt ist, den Inhalt des Zubereitungsgefäßes zu durchmischen. Mit anderen Worten wird das zumindest eine Nahrungsmittel im Zubereitungsgefäß so durcheinander gerührt, geschüttelt und/oder durch Zwang bzw. Rotation gemischt, so dass eine im Wesentlichen homogene Masse bzw. ein Gemisch entstehen kann.

Die Mischeinrichtung ist ausgelegt, das Zubereitungsgefäß in Rotation zu versetzen, wodurch insbesondere in Zusammenwirken mit einer an der Innenwandung des Zubereitungsgefäßes angeordneten Rippe bzw. Finne bzw. Schöpfrinne eine Durchmischung ergibt. Besonders bevorzugt ist die Rotationsachse des mit der Mischeinrichtung gekoppelten Zubereitungsgefäßes von der Vertikalen verschieden. Bevorzugt kann die Rotationsachse mit der Vertikalen einen Winkel β von etwa 30 Grad bis etwa 60 Grad, insbesondere etwa 45 Grad einschließen. Bevorzugt beträgt die Summe der Winkel α und β in etwa 90 Grad. Mit anderen Worten ist ein Bereich der konusförmigen Wandung des Zubereitungsgefäß im Wesentlichen horizontal orientiert, wenn das Zubereitungsgefäß in der Mischeinrichtung aufgenommen ist.

Die Mischeinrichtung kann zusätzlich ein Mischwerk bzw. Rührwerk aufweisen, welches zumindest bereichsweise in den Innenraum des Zubereitungsgefäßes verlagerbar ist. Das Rührwerk kann einen Rührbesen, eine Rührschnecke, Rührschieber oder ähnliches aufweisen, welches zumindest teilweise in die im Zubereitungsgefäß eingebrachten Nahrungsmittel eintaucht und diese durch mechanischen Zwang in eine Rotation versetzt und dadurch vermischt. Es versteht sich, dass das Rührwerk bzw. Mischwerk insbesondere in den Bereich, die mit dem zumindest einen Nahrungsmittel in Kontakt treten können, aus einem lebensmittelechten Werkstoff ausgebildet sind, beispielsweise aus korrosionsfreiem Stahl bzw. Edelstahl.

Vorzugsweise kann ein Wrasenabzug relativ zur Mischeinrichtung derart angeordnet sein, dass die Öffnung des Zubereitungsgefäßes während des Mischens in Richtung des Wrasenabzugs orientiert ist. Insbesondere kann der Wrasen und andere Dünste nach unten hin abgesaugt werden und insbesondere zur Kühleinrichtung geführt werden, um dort gekühlt bzw. entfeuchtet zu werden. Eine Seite des Wrasenabzugs kann zu einem Fenster in der Wandung der Vorrichtung orientiert sein, so dass ein Benutzer durch dieses Fenster auf diese Seite des Wrasenabzugs sehen kann. Daher kann bevorzugt eine Anzeige an dieser Seite des Wrasenabzugs angeordnet sein, welche beispielsweise Informationen zu der Speise und/oder dem Zubereitungsfortschritt anzeigen kann.

Die Vorrichtung kann zumindest eine Heizeinrichtung aufweisen, welche ausgelegt ist, den Inhalt des Zubereitungsgefäßes zu erhitzen. Insbesondere kann die Heizeinrichtung das Zubereitungsgefäß mittels Induktion erwärmen. Die Induktionsspulen können dabei im Wesentlichen kreisförmig oder langgestreckt gewickelt sein. Insbesondere kann die Induktionsspulengeometrie ausgelegt sein, der Wandungsform des Zubereitungsgefäßes zu entsprechen. Das Erhitzen des Zubereitungsgefäßes kann auch durch eine konventionelle elektrisch betriebene Heizplatte oder durch eine Gasflamme erfolgen. Die Heizeinrichtung kann im Wesentlichen horizontal orientiert sein. Insbesondere ist die Heizeinrichtung derart angeordnet, dass sie sich mit einem geringen Abstand von etwa 1 mm bis etwa 10 mm zum Zubereitungsgefäß befindet, wenn die in der Mischeinrichtung aufgenommen ist. Bevorzugt ist die Heizeinrichtung bereichsweise derart konkav ausgebildet, dass sie in diesem Bereich etwa denselben Krümmungsradius entlang einer Richtung aufweist, wie ein Bereich der Wandung des Zubereitungsgefäßes. Vorteilhafterweise kann dadurch der Wärmeeintrag in das Zubereitungsgefäß verbessert werden.

Bevorzugt kann zumindest ein Sensor vorgesehen sein, welcher einen Zustand des Zubereitungsgefäßes oder des Inhalts misst. Ein bevorzugter Sensor ist ein Temperatursensor, welcher die Temperatur des Zubereitungsgefäßes erfasst. Ein weiterer bevorzugter Sensor ist ein Temperatursensor, welcher die Temperatur des Inhalts des Zubereitungsgefäßes erfasst, wobei dieser Sensor zweckmäßigerweise eine berührungslose Temperaturmessung ermöglicht. Des Weiteren kann ein Sensor, insbesondere eine Kamera, vorgesehen sein, um den Inhalt des Zubereitungsgefäßes optisch zu erfassen. Des Weiteren kann ein Sensor, insbesondere ein Mikrofon, vorgesehen sein, um den Inhalt des Zubereitungsgefäßes akustisch zu erfassen. Die Messwerte des zumindest einen Sensors können an eine Heizsteuerung übermittelt werden, die mit dem zumindest einen Sensor kommunikativ verbunden ist. Die Heizsteuerung kann ausgelegt sein genau eine Heizeinrichtung oder mehrere Heizeinrichtungen zu steuern bzw. zu regeln. Insbesondere kann die Heizsteuerung einen Speicher aufweisen, in welchem zumindest eine Heizkurve abgelegt ist, um die Heizeinrichtung in Abhängigkeit von zumindest einem der folgenden Werte zu steuern bzw. zu regeln: a) der Temperatur des Zubereitungsgefäßes, b) der Temperatur des Inhalts des Zubereitungsgefäßes, c) den erfassten optischen Eigenschaften des Inhalts des Zubereitungsgefäßes, d) den erfassten akustischen Eigenschaften des Inhalts des Zubereitungsgefäßes. Besonders bevorzugt kann für jede Speise eine zugeordnete Heizkurve im Speicher der Heizeinrichtung abgespeichert sein.

Die Heizeinrichtung kann bevorzugt als Teil eines Kochstellenmoduls ausgebildet sein. Jedes Kochstellenmodul kann zumindest ein Element aus folgenden umfassen: eine Mischeinrichtung zur AufnahmeDurchmischung des Inhalts des Zubereitungsgefäßes, eine Heizeinrichtung, eine zugeordnete Heizsteuerung, zumindest einen Sensor, einen Wrasenabzug und eine Anzeige. Dabei können die Mischeinrichtung und/oder die Heizeinrichtung eine Einrichtung zur Aufnahme des Zubereitungsgefäßes aufweisen. Es versteht sich, dass das Kochstellenmodul einen gesonderten Aspekt einer Erfindung losgelöst von den weiteren Merkmalen der Vorrichtung darstellen kann, da ein Kochstellenmodul vorteilhafterweise auch für andere Kochanwendungen außerhalb der Vorrichtung interessant ist, insbesondere da das Garen mittels der individuellen Heizkurven ein Gelingen der Speise fördert.

Die Vorrichtung weist zumindest einen (ersten) Manipulator auf, welcher ausgelegt ist, das zumindest eine Zubereitungsgefäß zu handhaben. Es versteht sich, dass auch zwei, drei oder mehr erste Manipulatoren vorgesehen sein können, die bevorzugt identisch ausgebildet sind, um jeweils ein zugeordnetes Zubereitungsgefäß zu handhaben. Der erste Manipulator kann ein Roboter, insbesondere ein Knickarmroboter, SCARA-Roboter oder Delta-Roboter sein. Der Knickarmroboter kann bevorzugt fünf, sechs oder sieben Achsen aufweisen. Der zumindest eine Manipulator kann am einem Boden oder an einer Decke des Innenraums der Vorrichtung montiert sein. Der Manipulator kann einen Endeffektor am distalen Endglied montiert haben, wobei der Endeffektor ausgelegt ist, das Zubereitungsgefäß an einem Handhabungselement zu greifen. Dazu kann der Endeffektor mit dem Handhabungselement in Reibschluß und/oder Formschluß gelangen und insbesondere kann der Endeffektor mit dem Handhabungselement verriegelt werden. Der Manipulator kann insbesondere desinfizierbar bzw. lebensmittelecht ausgebildet sein. Besonders bevorzugt ist der Manipulator aus einem korrosionsfreien Metall bzw. einem chemisch inerten Material ausgebildet beispielsweise aus Edelstahl oder einem chemisch resistenten Kunststoff. Zweckmäßigerweise ist der Manipulator derart ausgebildet, keine Verunreinigungen wie zum Beispiel Öltröpfchen, Staub oder Metallabrieb in die Umgebung freizusetzen. Insbesondere kann ein Unterdruck im Inneren des Manipulators angelegt sein bzw. erzeugt werden, um derartige Verunreinigungen in das Innere des Manipulators zu saugen. Dadurch wird vorteilhafterweise verhindert, dass diese Verunreinigungen in das Innere der Vorrichtung gelangt und dort die Nahrungsmittel kontaminiert. Beispielsweise kann ein Lüfter im proximalen Endglied des Manipulators angeordnet sein, wobei ein Luftstrom generiert wird, welcher aus der Umgebung des Manipulators durch die Spalten des Manipulators in das Innere des Manipulators führt, und von dort, bevorzugt über ein Filterelement aus dem Manipulator von dem Arbeitsbereich des Manipulators weggeführt wird. Vorteilhafterweise kann die durch den Manipulator geführte Luft durch das Filterelement gereinigt werden. Des Weiteren kann der Manipulator derart gesteuert sein, dass sich während der Zubereitung einer Speise keine Komponente des Manipulators oberhalb des Zubereitungsgefäßes befindet. Durch diese Maßnahme kann das Risiko minimiert werden, dass Verunreinigungen wie zum Beispiel Öltröpfchen, Staub oder Metallabrieb aus dem Manipulator in die Speise fallen.

Alternativ zu einer korrosionsfreien oder chemisch inerten Manipulatoroberfläche kann der Manipulator mit einer leicht zu reinigenden Hülle überzogen sein. Auch die Hülle sorgt vorteilhafter Weise dafür, dass Verunreinigungen nicht vom Manipulator auf die Nahrungsmittel gelangen. Die Hülle kann bevorzugt aus einem Polymer, insbesondere einem Elastomer ausgebildet sein. Bevorzugt ist die Hülle gegenüber Reinigungs- und Desinfektionsmitteln, wie beispielsweise Alkoholen, Laugen oder Tensiden, resistent ausgebildet.

Der erste Manipulator kann eine Wägeeinrichtung aufweisen, welche ausgelegt ist, die am Endeffektor wirkende Kraft, insbesondere die vertikal wirkende Gewichtskraft, zu bestimmen bzw. zu messen. Dadurch kann das Gewicht der in das Zubereitungsgefäß eingefüllten Nahrungsmittel unabhängig von einer Messung an den Spendereinrichtungen gemessen werden.

Die Vorrichtung kann zumindest eine Übergabestation aufweisen, in welcher der Inhalt des Zubereitungsgefäßes einem Serviergefäß übergeben wird.

Die Übergabestation kann eine im Wesentlichen ebene Fläche aufweisen, auf welche das Serviergefäß bereitgestellt wird. Die Übergabestation ist zumindest bereichsweise im Arbeitsbereich des ersten Manipulators angeordnet. Das Umfüllen der Nahrungsmittel aus dem Zubereitungsgefäß ins das Serviergefäß kann durch ein Kippen des Zubereitungsgefäßes mittels des Manipulators erfolgen, wobei die zubereiteten Nahrungsmittel in das Serviergefäß gefüllt werden. Um ein möglichst vollständiges Umfüllen zu erreichen, kann das Zubereitungsgefäß während des Umfüllens um seine Rotationsachse gedreht werden. Die im Wesentlichen ebene Fläche der Übergabestation kann bevorzugt derart ausgebildet sein, dass diese leicht zu reinigen ist. Beispielsweise kann die Fläche aus korrosionsfreiem Stahl oder Edelstahl oder einem Kunststoff ausgebildet sein. Besonders bevorzugt umfasst die Übergabestation einen Abfluss, welcher ausgelegt ist, ein Reinigungsfluid abzuleiten, mit welchem die Übergabestation gereinigt wird.

Alternativ kann die Übergabe auch direkt von dem ersten zum zweiten Manipulator erfolgen. Mit anderen Worten kann der zweite Manipulator das Serviergefäß bereitstellen und/oder (bevorzugt in der Luft) halten, während der erste Manipulator den Inhalt des Zubereitungsgefäßes in das Serviergefäß kippt bzw. füllt. In diesem Fall kann der gemeinsame Arbeitsraum der beiden Manipulatoren und gegebenenfalls die darunter befindliche Fläche als Übergabestation bezeichnet werden, insbesondere auch für den Fall, dass das Serviergefäß nicht auf der Fläche abgestellt wird.

Die Vorrichtung kann zumindest einen (zweiten) Manipulator aufweisen, welcher ausgelegt ist, das zumindest eine Serviergefäß zu handhaben.

Der zweite Manipulator kann ein Roboter, insbesondere ein Knickarmroboter, SCARA-Roboter oder Delta-Roboter sein. Der Knickarmroboter kann bevorzugt fünf, sechs oder sieben Achsen aufweisen. Der zumindest eine zweite Manipulator kann am einem Boden oder an einer Decke des Innenraums der Vorrichtung montiert sein. Der zweite Manipulator kann einen Endeffektor am distalen Endglied montiert haben, wobei der Endeffektor ausgelegt ist, das Serviergefäß an einem Handhabungsbereich zu greifen. Dazu kann der Endeffektor mit dem Handhabungsbereich in Reibschluß und/oder Formschluß gelangen und insbesondere kann der Endeffektor mit dem Handhabungsbereich verriegelt werden. Der Manipulator kann insbesondere desinfizierbar bzw. lebensmittelecht ausgebildet sein. Besonders bevorzugt ist der zweite Manipulator aus einem korrosionsfreien Metall bzw. einem chemisch inerten Material ausgebildet beispielsweise aus Edelstahl oder einem chemisch resistenten Kunststoff. Zweckmäßigerweise ist der zweite Manipulator derart ausgebildet, keine Verunreinigungen wie zum Beispiel Öltröpfchen, Staub oder Metallabrieb in die Umgebung freizusetzen. Insbesondere kann ein Unterdruck im Inneren des zweiten Manipulators angelegt sein bzw. erzeugt werden, um derartige Verunreinigungen in das Innere des Manipulators zu saugen. Dadurch wird vorteilhafterweise verhindert, dass diese Verunreinigungen in das Innere der Vorrichtung gelangt und dort die Nahrungsmittel kontaminiert. Beispielsweise kann ein Lüfter im proximalen Endglied des zweiten Manipulators angeordnet sein, wobei ein Luftstrom generiert wird, welcher aus der Umgebung des zweiten Manipulators durch die Spalten des zweiten Manipulators in das Innere des zweiten Manipulators führt, und von dort, bevorzugt über ein Filterelement aus dem zweiten Manipulator von dem Arbeitsbereich des zweiten Manipulators weggeführt wird. Vorteilhafterweise kann die durch den zweiten Manipulator geführte Luft durch das Filterelement gereinigt werden.

Alternativ zu einer korrosionsfreien oder chemisch inerten Manipulatoroberfläche kann der zweite Manipulator mit einer leicht zu reinigenden Hülle überzogen sein. Auch die Hülle sorgt vorteilhafter Weise dafür, dass Verunreinigungen nicht vom zweite n Manipulator auf die Nahrungsmittel gelangen. Die Hülle kann bevorzugt aus einem Polymer, insbesondere einem Elastomer ausgebildet sein. Bevorzugt ist die Hülle gegenüber Reinigungs- und Desinfektionsmitteln, wie beispielsweise Alkoholen, Laugen oder Tensiden, resistent ausgebildet.

Besonders bevorzugt weist die Vorrichtung einen ersten und zweiten Manipulator auf, wobei der erste Manipulator ausgelegt ist, das Zubereitungsgefäß zu handhaben, und der zweite Manipulator ausgelegt ist, das Serviergefäß zu handhaben. Dementsprechend ist die Übergabestation zumindest bereichsweise sowohl im Arbeitsraum des ersten als auch im Arbeitsraum des zweiten Manipulators angeordnet. Bevorzugt kann auch nur genau ein Manipulator vorgesehen sein, welcher ausgelegt ist die Aufgaben des ersten und zweiten Manipulators zu übernehmen und sowohl das Zubereitungsgefäß als auch das Serviergefäß zu handhaben.

Das Handhaben bzw. Bereitstellen des Serviergefäßes durch den zweiten Manipulator kann insbesondere auch ein Vereinzeln des Serviergefäßes aus einem Stapel von Serviergefäßen beinhalten. Dazu kann der zweite Manipulator ein Serviergefäß aus einer Vereinzelungseinrichtung entnehmen. Die Vereinzelungseinrichtung kann insbesondere ausgelegt sein, einen Stapel von Serviergefäßen zu halten, insbesondere oberhalb einer Ausgabeöffnung, wobei bevorzugt das unterste Serviergefäß vereinzelt bzw. vom Stapel gelöst werden kann, um mittels der Schwerkraft nach unten durch die Ausgabeöffnung zu fallen. Dazu kann die Vereinzelungseinrichtung zumindest einen angetriebenen keilförmigen Aktuator aufweisen, welcher das unterste Serviergefäß an einem Rand erfasst und nach unten verlagert, bis es vom Stapel gelöst ist. Bevorzugt weist die Vereinzelungseinrichtung zwei, drei oder mehr Aktuatoren auf. Insbesondere können die Aktuatoren ausgebildet sein, den Stapel von Serviergefäßen seitlich zu stützen und/oder zu halten, insbesondere durch Klemmen des Stapels zwischen den Aktuatoren. In einer besonders bevorzugten Ausführungsform der Vereinzelungseinrichtung ist der zumindest eine Aktuator als im wesentlichen zylinderförmiger Körper ausgebildet, an dessen Mantelfläche ein Schneckengang bzw. ein Gewindegang ausgebildet ist, in welchem der Rand des Serviergefäßes eingreifen kann, so dass der Rand durch den Schneckengang bzw. Gewindegang geführt bzw. verlagert werden kann, wenn sich der Aktuator dreht. Insbesondere kann der Schneckengang bzw. Gewindegang derart ausgebildet sein, dass die Steigung des Ganges von oben nach unten stetig höher wird. Mit anderen Worten bewirkt eine Drehung des Aktuators im oberen Teil, dort wo das Serviergefäß noch mit dem Stapel, insbesondere durch Haftreibung, verbunden ist, eine geringerer vertikale Verlagerung als im unteren Teil, wo das Serviergefäß bereits vom Stapel gelöst ist. Mit anderen Worten nimmt bei gleichmäßiger Drehung des Aktuators die Verlagerungsgeschwindigkeit von oben nach unten zu, während die auf den Rand des Serviergefäß übertragene Kraft von oben nach unten abnimmt. Dies ist vorteilhaft, da bei einer Vereinzelung des Serviergefäß entlang der Schwerkraft die aufzubringende kraft von oben (zum Überwinden der Haftreibung) nach unten (nach dem Lösen) abnimmt. Zum synchronen Drehen bzw. Rotieren von zwei oder mehr Aktuatoren kann ein (Zahn-)Riemen, eine Kette oder ein Zahnkranz vorgesehen sein, welcher die Aktuatoren untereinander mechanisch und optional mit einem Antrieb verbindet. Der Antrieb kann auch durch den zweiten Manipulator erfolgen, sofern einer der Aktuatoren bzw. ein Antrieb eine Kopplung mit dem zweiten Manipulator ermöglicht, insbesondere mit einem Endeffektor des zweiten Manipulators. Es versteht sich, dass die Orientierung des Schneckengangs und damit die Wirkung umgekehrt werden kann, sofern eine Vereinzelung entgegen der Schwerkraft erreicht werden soll. Es versteht sich ferner, dass die Vereinzelungseinrichtung einen gesonderten Aspekt einer Erfindung losgelöst von den weiteren Merkmalen der Vorrichtung darstellen kann, da eine vorteilhafte Vereinzelung von Serviergefäßen oder anderen Gefäßen auch für andere Anwendungen interessant ist.

Die Vorrichtung kann zumindest eine Ausgabestation aufweisen, in welcher das Serviergefäß aus der Vorrichtung ausgegeben wird.

Die Ausgabestation kann das zumindest ein Ausgabefach aufweisen, welches eine zugeordnete verschließbare Öffnung in der Wandlung der Vorrichtung umfasst. Die Öffnung kann durch eine Klappe, welche einen Teil der Wandung der Vorrichtung ausbildet, verschließbar sein. Die Klappe kann bevorzugt zumindest bereichsweise durchsichtig, beispielsweise aus Glas oder durchsichtigem Kunststoff, ausgebildet sein, um einen Blick auf die in der Ausgabestation bzw. dem Ausgabefach bereitgestellten Speise zu gewähren.

Bevorzugt kann jedes Ausgabefach als Schleuse ausgebildet sein, wobei das Ausgabefach durch eine zweite Wandlung von dem Inneren der Vorrichtung getrennt wird, wenn die verschließbare Öffnung bzw. Klappe geöffnet ist, um den Zugriff auf das Ausgabefach zu ermöglichen. Vorteilhafterweise kann dadurch zu einen verhindert werden, dass ein Nutzer in das Innere der Vorrichtung eingreifen kann und zu anderen verhindert werden, dass ein Luftaustausch stattfindet, der eine Erwärmung und/oder Kontamination der Innenluft bewirken kann. Bevorzugt weist jedes der Ausgabefächer eine drehbare Bodenplatte auf, auf welcher das Serviergefäß abgestellt werden kann, um es einem Nutzer zur Abholung bereitzustellen. Durch ein Drehen der Bodenplatte, welches durch ein Ziehen an der mit der Bodenplatte verbundenen Klappe bewirkt werden kann, wird die zubereitete Speise aus der Vorrichtung verlagert, um den Zugriff durch einen Nutzer zu erleichtern. Weiter vorzugsweise können Luftaustrittsdüsen an der dem Inneren der Vorrichtung zugewandten Seite des Ausgabefaches angeordnet sein, aus denen warme Luft austritt, um einen Luftvorhang zu bilden, der eine thermische Entkopplung des Ausgabefaches vom Inneren der Vorrichtung bewirkt.

Die Ausgabestation kann bevorzugt ein, zwei, drei, vier, fünf, sechs, acht, zehn, zwölf oder mehr Ausgabefächer aufweisen. Dabei kann jedes der Ausgabefächer auf der Außenseite der Wandung bzw. der Klappe durch eine eindeutige Identifikation gekennzeichnet sein. Bevorzugt kann die eindeutige Identifikation eine (fortlaufende) Nummer, ein alpha-numerisches Zeichen, ein Symbol oder ein QR-Code sein. Weiter bevorzugt kann die eindeutige Identifikation variabel ausgebildet sein, insbesondere durch eine Anzeige bzw. ein Display, welches eine aktuelle eindeutige Identifikation anzeigen kann. Vorteilhafterweise ist die durch den Nutzer für eine bestimmte Speise zu öffnende Klappe gekennzeichnet.

Jedes der Ausgabefächer kann durch eine Wärmeeinrichtung zum Warmhalten der fertig zubereiteten Speisen ausgestattet sein, um die Speise auf eine angenehme Esstemperatur zu halten, bis der Nutzer die Speise aus dem Ausgabefach entnimmt.

Vorzugsweise kann das Serviergefäß mittels des zweiten Manipulators zeitlich nach der Aufnahme in der Übergabestation und vor dem Abstellen in der Ausgabestation in einen Nachbereitungsbereich der Vorrichtung verlagern werden. Im Nachbereitungsbereich kann die im Serviergefäß enthaltene zubereitete Speise weiter verfeinert werden. Bevorzugt kann er Nachbereitungsbereich weitere Aufbewahrungsbehälter und weitere zugeordnete Spendereinrichtungen aufweisen, um weitere Bestandteile der Speise, insbesondere Soßen, Dressings, Toppings, Garnituren, Verzierungen, Ketchup, Mayonnaise, Kräuter, Gewürze, Obst, Gemüse, Fleischstückchen, geriebenen Käse, Würzmischungen, Mandelsplitter, Sahnehauben, Meerrettichhauben, Wasabihauben oder ähnliches auf der zubereiteten Speise anzuordnen. Dabei findet insbesondere kein Mischen dieser weiteren Bestandteilen der Speisen mit dem Inhalt des Serviergefäßes statt. Ein Verzieren oder Garnieren kann dabei mit Hilfe eines Bewegens des zweiten Manipulators relativ zur Spendereinrichtung erfolgen. Besonders bevorzugt kann mittels einer entsprechenden Bewegung des zweiten Manipulators eine Verzierung in Form von Mustern oder zumindest eines Zeichens oder Buchstabens erfolgen. Weiter bevorzugt können Schablonen vorgesehen sein, um durch das Auftragen der Verzierung eine Figur bzw. ein Bild auf der Speise aufzubringen.

Die Vorrichtung kann zumindest eine Temperiereinrichtung aufweisen, welche das Innere der Vorrichtung oder Teile davon zumindest bereichsweise auf einer vorbestimmten Temperatur hält. Unter einem Temperieren wird im Sinne der Erfindung sowohl ein Kühlen auf eine Temperatur unter der Umgebungstemperatur der Vorrichtung als auch ein Erwärmen auf eine Temperatur oberhalb der Umgebungstemperatur der Vorrichtung verstanden. Bevorzugt ist eine Kühleinrichtung vorgesehen, welche die Aufbewahrungsbehälter bzw. den Inhalt der Aufbewahrungsbehälter auf eine Temperatur zwischen etwa +2 °C bis +8 °C, bevorzugt zwischen etwa +2 °C und etwa +7 °C, insbesondere zwischen etwa +3 °C und +5 °C konstant hält. Vorteilhafterweise können somit die in den Aufbewahrungsbehälter aufbewahrten Nahrungsmittel für einen Zeitraum von wenigstens 12 Stunden, bevorzugt von wenigstens 18 Stunden, insbesondere von wenigstens 24 Stunden frisch gehalten werden. Die Temperiereinrichtung kann bevorzugt eine Entfeuchtungseinrichtung aufweisen, welche ausgelegt ist, Luft zu entfeuchten. Dadurch wird vorteilhafterweise die Gefahr von Kondenswasserbildung innerhalb der Vorrichtung vermindert.

Um eine möglichst gute Haltbarkeit der in der Vorrichtung gelagerten Nahrungsmittel zu gewährleisten, ist es zweckmäßig, im Wesentlichen das gesamte Innere der Vorrichtung auf eine Temperatur kleiner als etwa +10 °C zu kühlen. Davon ausgenommen ist in der Regel lediglich die Heizeinrichtung und das an der Heizeinrichtung angeordnete Zubereitungsgefäß, in welchem die Nahrungsmittel zu einer Speise zubereitet werden. Ferner sind die Ausgabefächer der Ausgabestation davon ausgenommen, da dort die fertig zubereiteten Speisen warm gehalten werden. Die übrigen Bereiche der Vorrichtung zu kühlen, erlaubt es in einfacher Weise die strengen hygienischen Standards für die Zubereitung von Nahrungsmitteln einzuhalten.

Das Kühlen von Bereichen der Vorrichtung kann bevorzugt durch das Bereitstellen gekühlte Luft erfolgen. Die Vorrichtung kann dazu mit Anschlüssen für warme Abluft und kühler Zuluft versehen sein. An diesen Anschlüssen kann entsprechend ein externes Kühlaggregat angeschlossen sein, welches die warme Abluft aus der Vorrichtung kühlt und an dem Anschluß für kühle Zuluft bereitstellt. Das Kühlaggregat kann extern ausgebildet sein und nicht Bestandteil der Vorrichtung oder als Bestandteil der Vorrichtung ausgebildet. Bevorzugt ist im Innenraum der Vorrichtung ein geschlossener Luftkreislauf vorgesehen, der eine Aufbereitung/Filterung der Luft vorsieht, welche dann, insbesondere gekühlt, wieder im Innenraum der Vorrichtung verteilt wird. Vorteilhafterweise kann so eine Abluftöffnung in der Wandung vermieden werden. Das Wegfallen einer Abluftöffnung bzw. eines Abluftkamins bietet zudem den Vorteil, dass keine abluftbedingte Geruchsbelästigung in der Umgebung der Vorrichtung auftritt und auch keine baulichen Maßnahmen zum Ableiten der Abluft erfolgen müssen. Besonders bevorzugt erfolgt das Abkühlen der Luft durch einen Wärmetauscher. Weiter bevorzugt wird die Luft ebenfalls entfeuchtet, insbesondere da der beim Erhitzen des Zubereitungsgefäßes entstehende Wrasen sich sonst an den Innenwänden der Vorrichtung niederschlagen könnte, was es zu verhindern gilt. Besonders bevorzugt kann die an dem Wärmetauscher anfallende Abwärme dazu genutzt werden, um andere Bereiche der Vorrichtung zu erwärmen. Insbesondere kann diese Abwärme dazu genutzt werden, eine der vorgesehenen Heizeinrichtungen mit Wärme zu versorgen.

Die Vorrichtung kann zumindest eine Heizeinrichtung als bevorzugten Ausführungsform einer Temperiereinrichtung aufweisen. Insbesondere kann die Vorrichtung einen Induktionsherd aufweisen, der ausgelegt ist, das Zubereitungsgefäß zum Zubereiten der Speisen zu erwärmen. Das Erhitzen des Zubereitungsgefäßes kann auch durch eine konventionelle elektrisch betriebene Heizplatte oder durch eine Gasflamme erfolgen. Des Weiteren kann eine Heizeinrichtung vorgesehen sein, welche die Ausgabefächer der Ausgabestation erwärmt, um die dort zur Verfügung gestellten fertigen Speisen warm zu halten. Des Weiteren kann eine Heizeinrichtung vorgesehen sein, welche frisches Trinkwasser bzw. Leitungswasser erwärmt.

Die Vorrichtung kann zumindest Hygieneeinrichtung aufweisen, welche das Innere der Vorrichtung oder Teile davon zumindest bereichsweise reinigt.

Bevorzugt kann die zumindest eine Hygieneeinrichtung als Spüleinrichtung ausgebildet sein, welche ausgelegt ist, dass zumindest eine Zubereitungsgefäß nach Gebrauch zu reinigen. Dazu kann ein Spülen des Zubereitungsgefäßes mit kaltem und/oder heißem Wasser vorgesehen sein. Insbesondere kann das Wasser mit einem Druck von mehr als 1 bar, bevorzugt mehr als 1,5 bar, bevorzugt mehr als 2 bar, insbesondere mehr als 3 bar in das Zubereitungsgefäß gesprüht werden, um die dort vorhandenen Nahrungsmittelreste zu entfernen. Das Wasser kann durch eine oder mehrere Sprühdüsen austreten, um den entsprechenden Druck zu erreichen. Die zumindest eine Sprühdüse kann dabei drehbar oder stationär in der zugeordneten Hygieneeinrichtung angeordnet sein. Dabei kann eine Beweglichkeit der zumindest einen Sprühdüse zweckmäßigerweise zu einer Reduktion der notwendigen Anzahl von Sprühdüsen führen. Eine stationäre Anordnung der Sprühdüsen führt hingegen zu einer einfachen Konstruktion.

Das warme Spülwasser kann insbesondere durch die im Wärmetauscher der Kühleinrichtung anfallende Abwärme erwärmt werden. Des Weiteren kann das Wasser mit einem Spülmittel versehen sein, welches insbesondere fettlösliche Eigenschaften aufweist, um die Reinigung des Zubereitungsgefäßes zu verbessern. Alternativ oder zusätzlich eine Reinigungsbürste vorgesehen sein, welches das Zubereitungsgefäß mechanisch reinigt. Besonders bevorzugt kann das Zubereitungsgefäß abschließend mit warmer bzw. heißer Luft getrocknet werden. Alternativ kann das Zubereitungsgefäß an einem dafür vorgesehenen Standort gelagert werden, bis es getrocknet ist, um danach weiter verwendet zu werden.

Vorzugsweise kann eine der zumindest einen Hygieneeinrichtungen als UV-Lampe ausgebildet sein, welche ausgelegt ist, eine Fläche bzw. Oberfläche des Innenraums der Vorrichtung zu bestrahlen, um dort Bakterien und/oder Viren abzutöten. Beispielsweise kann eine solche Fläche bzw. Oberfläche die Übergabestation, der Boden der Vorrichtung, Wandungen der Vorrichtung, sonstige Flächen der Vorrichtung oder ähnliches sein. Vorteilhafterweise kann mittels des UV-Lichts auf dauerhafte Weise eine Keimbelastung des Innenraums der Vorrichtung reduziert werden, ohne Reinigungsmittel einzusetzen und dabei den Betrieb der Vorrichtung zu stören. Zweckmäßigerweise sind durchsichtige Öffnungen der Wandlung der Vorrichtung durch UV-Licht sperrende durchsichtige Werkstoffe ausgebildet.

Vorzugsweise kann eine der Hygieneeinrichtungen auch als Luftaufbereitungseinrichtung ausgebildet sein, welche mittels UV-Licht und/oder Plasma die Luft, welche die Luftaufbereitungseinrichtung durchströmt, von schädlichen Keimen befreit. Vorteilhafterweise zerstört insbesondere das Plasma Bakterien, Viren, Pilze und Prionen und gegebenenfalls auch toxische Stoffe und weitere organische Verunreinigungen. In Abhängigkeit von der Kontaktzeit der Luft mit dem Plasma ist vorteilhafterweise auch eine vollständige Sterilisation möglich. Besonders bevorzugt wird in der Luftaufbereitungseinrichtung ein Plasma durch eine Piezoelektrische Direktentladung (PDD) erzeugt. Vorteilhafterweise kann durch diese Art der Desinfektion auf aufwändige Vakuumanlagen oder giftige Chemikalien verzichtet werden, wodurch die Vorrichtung eine geringere Gefahr aufweist, die Nahrungsmittel mit diesen Chemikalien zu kontaminierten. Des Weiteren sind atmosphärische Druckplasmen der PDD Entladung kalt, wodurch die Plasma-Desinfektion in der Luftaufbereitungseinrichtung im Vergleich zu den üblichen Desinfektionsverfahren mit Heißluft, Heißwasserdampf oder toxischen Substanzen sehr schonend und energiesparend ist, da eine zusätzliche Abkühlung der Heißluft nicht erforderlich ist. Vorteilhafterweise kann die Desinfektion der Luft mit atmosphärischem kalten Plasma in der Kühleinrichtung erfolgen, welche verwendet wird, um die Luft im Innenraum der Vorrichtung zu kühlen. Ein weiterer Vorteil besteht darin, dass durch die Verwendung von Plasma zur Luftaufbereitung Gerüche eliminiert werden, so dass der typische Küchengeruch im Inneren der Vorrichtung neutralisiert wird und daher eine Geruchsbelästigung der Umgebung der Vorrichtung auch für den Fall vermieden wird, dass ein Luftaustausch zwischen dem Inneren der Vorrichtung und der Umgebung erfolgen würde.

Die Vorrichtung kann zumindest eine Steuereinrichtung aufweisen, welche zumindest eine der Komponenten steuert bzw. regelt, um die Zubereitung durchzuführen. Die Steuerung kann beispielsweise die Bewegungen eines oder beider Manipulatoren steuern, wobei diese Steuerung dann auch als Manipulatorsteuerung bezeichnet wird. Auch andere Einrichtungen können durch eine zugeordnete Einrichtungssteuerung gesteuert bzw. geregelt werden. Es versteht sich, dass auch eine Vielzahl von einzelnen (Einrichtungs- und/oder Manipulator-)Steuerungen für die einzelnen Einrichtungen in ihrer Gesamtheit als Steuerung bezeichnet werden können. Die Aufgabe der (Einrichtungs- und/oder Manipulator-)Steuerungen ist es, die Einrichtungen anhand spezifischer Kontrollbefehle/-signale zu steuern bzw. zu regeln. Daher können diese Steuerungen auch spezifische Hard- und/oder Software aufweisen, die von der Einrichtung abhängig ist. Des Weiteren kann eine oder mehrere dieser (Einrichtungs- und/oder Manipulator-)Steuerungen auch Sicherheitsfunktionen übernehmen. Alternativ oder zusätzlich kann auch eine Sicherheitssteuerung vorgesehen sein, welche die Sicherheitsfunktionen übernimmt. Unter einer Sicherheitsfunktion wird insbesondere verstanden, dass bei Öffnen der Wandung der Vorrichtung bzw. bei Betreten der Vorrichtung durch eine Person, eine oder mehrere Einrichtungen, insbesondere die Manipulatoren, stillgesetzt werden bzw. in einen sicheren Zustand versetzt werden, in welchem die Person nicht durch die entsprechende Einrichtung gefährdet wird. Eine Sicherheitsfunktion kann auch die Überwachung der Betriebsparameter einer der Einrichtungen der Vorrichtung sein, beispielsweise Umdrehungszahlen, Temperaturen und sonstige Parameter.

Die Vorrichtung kann zumindest eine Kommunikationseinrichtung, welche ausgelegt ist, die Steuereinrichtung mit einem Benutzer oder einer übergeordneten Steuerung kommunikativ zu verbinden. Die übergeordnete Steuerung kann beispielsweise außerhalb der Vorrichtung lokalisiert sein, beispielsweise in einem Rechenzentrum oder mittels eines (virtuellen und/oder dezentralen) Servers implementiert werden. Beispielsweise kann der Bestellvorgang eines Benutzer, die Rezeptauswahl und die Auswahl der zur Zubereitung des Rezept notwendigen Instruktionen durch die übergeordnete Steuerung erfolgen.

Eine übergeordnete Steuerung kann beispielsweise mit einer Mehrzahl von Vorrichtungen kommunikativ verbunden sein und insbesondere Aufträge zur Zubereitung von Speisen an eine ausgewählte Vorrichtung versenden. Das Auswählen kann beispielsweise anhand der Entfernung zum die Speise bestellenden Benutzer erfolgen.

Des Weiteren kann die übergeordnete Steuerung die Mehrzahl von Vorrichtungen überwachen, beispielsweise die Funktion, technische Fehler oder den Vorrat der Nahrungsmittel. Des Weiteren kann die übergeordnete Steuerung die Vorschriften zur Zubereitung der Speisen bzw. die Rezepte bei Bedarf an die einzelnen Vorrichtungen übermitteln und so das Speisenangebot ergänzen oder variieren. Jede einzelne Vorrichtung kann eine Speichereinrichtung, insbesondere einen nicht-flüchtigen Speicher, aufweisen, in welchem diese Rezepte lokal abgelegt sind, so dass das Rezept nicht bei jeder Ausführung von der übergeordneten Steuerung über die Kommunikationseinrichtung empfangen werden muss. Die Kommunikationseinrichtung kann auch eine Verbindung zu einer Cloud herstellen, so dass die für die Vorrichtung relevanten Informationen dort abgelegt sein können. Vorteilhafterweise kann so eine Aktualisierung in einfacher Weise durchgeführt werden. Auch in diesem Fall kann ein Speicher zur lokalen Pufferung dieser Daten vorgesehen sein.

Ferner können Daten der Vorrichtung über die Kommunikationseinrichtung an die übergeordnete Steuerung übermittelt werden, beispielsweise allgemeine Zustandsparameter, Vorrat in der Aufbewahrungsbehältern, Anlagenfehler, Logdateien, Metriken und Sensordaten. Dadurch kann ein Monitoring der Vorrichtung oder eine Fernwartung erfolgen. Auch ein aktives Management der Nahrungsmittel in der Vorrichtung kann damit erfolgen.

Ein weitere Aspekt der Erfindung betrifft ein Verfahren zum automatischen Zubereiten von Nahrungsmitteln mit den Merkmalen des Anspruchs 10 , wobei das Verfahren zumindest einen der folgenden Verfahrensschritte aufweist:
- Eingang eines Auftrags zur Zubereitung einer Speise in der Steuereinrichtung;
- Auswahl eines zur Speise zugeordneten Rezeptes durch die Steuereinrichtung;
- Auswahl eines zur Speise zugeordneten Zubereitungsgefäßes durch die Steuereinrichtung;
- Greifen des ausgewähtlen Zubereitungsgefäßes durch einen ersten Manipulator;
- Positionieren des Zubereitungsgefäßes mittels des ersten Manipulators gemäß dem ausgewählten Rezept nacheinander an zumindest zwei Spendereinrichtungen, wobei die Spendereinrichtungen gemäß dem Rezept die notwendigen Nahrungsmittel in das Zubereitungsgefäß füllen;
- Positionieren des Zubereitungsgefäßes mittels des ersten Manipulators an der Mischeinrichtung bzw. der Heizeinrichtung;
- Mischen des Inhalts des Zubereitungsgefäßes mittels der Mischeinrichtung und/oder Erhitzen des Inhalts des Zubereitungsgefäßes mittels der Heizeinrichtung gemäß des ausgewählten Rezepts;
- Verlagern des Zubereitungsgefäßes mittels des ersten Manipulators zu einer Übergabestation;
- Bereitsstellen eines Serviergefäßes, bevorzugt durch Vereinzeln aus einem Stapel von Serviergefäßen;
- Umfüllen des Inhalts des Zubereitungsgefäßes in das bereitgestellte Serviergefäß, wobei während des Bereitstellens und/oder des Umfüllens ein zweiter Manipulators das Serviergefäß handhabt;
- Positionieren des Serviergefäßes mittels des zweiten Manipulators gemäß dem Rezept nacheinander an zumindest einer ausgewählten Spendereinrichtung, so dass die Spendereinrichtung gemäß dem Rezept die notwendigen Nahrungsmittel, beispielsweise ein Topping, in das Serviergefäß füllen kann;
- Verlagern des Serviergefäßes an bzw. in eine Ausgabestation, um für die Ausgabe an den Benutzer bereitgestellt zu werden;
- Identifizieren des Benutzers und Freigabe der Ausgabestation, in welcher sich die dem Benutzer zugeordnete Speise in dem Serviergefäß befindet;
- Reinigen des Zubereitungsgefäßes zur weiteren Verwendung;

Bevorzugte Ausführungsformen werden in den Figuren näher gezeigt. Gleiche Elemente sind in den Figuren mit gleichen Bezugszeichen versehen. Es zeigt:
- Fig. 1: eine perspektivische Ansicht einer erfindungsgemäßen Vorrichtung zum automatisierten Zubereiten von Nahrungsmitteln;
- Fig. 2: eine Frontansicht der in der Figur 1 gezeigten Ausführungsform;
- Fig. 3: eine weitere Frontansicht der in der Figur 1 gezeigten Ausführungsform mit geöffneter Wandung;
- Fig. 4: eine Seitenansicht der in der Figur 1 gezeigten Ausführungsform mit geöffneter Wandung;
- Fig. 5: eine weitere Seitenansicht der in der Figur 1 gezeigten Ausführungsform mit geöffneter Wandung;
- Fig. 6: eine Draufsicht der in der Figur 1 gezeigten Ausführungsform mit geöffneter Wandung;
- Fig. 7: eine Frontansicht einer Ausführungsform ohne technische Elemente;
- Fig. 8: eine Seitenansicht der in der Figur 7 gezeigten Ausführungsform;
- Fig. 9: eine weitere Seitenansicht der in der Figur 7 gezeigten Ausführungsform;
- Fig. 10: eine Draufsicht der in der Figur 1 gezeigten Ausführungsform;
- Fig. 11: eine Ansicht eines erfindungsgemäßen Zubereitungsgefäßes;
- Fig. 12: eine Ansicht einer Heiz- und Mischeinrichtung;
- Fig. 13: eine perspektivische Ansicht einer Vereinzelungseinrichtung für Serviergefäße;
- Fig. 14: eine Seitenansicht der Vereinzelungseinrichtung aus Figur 13.

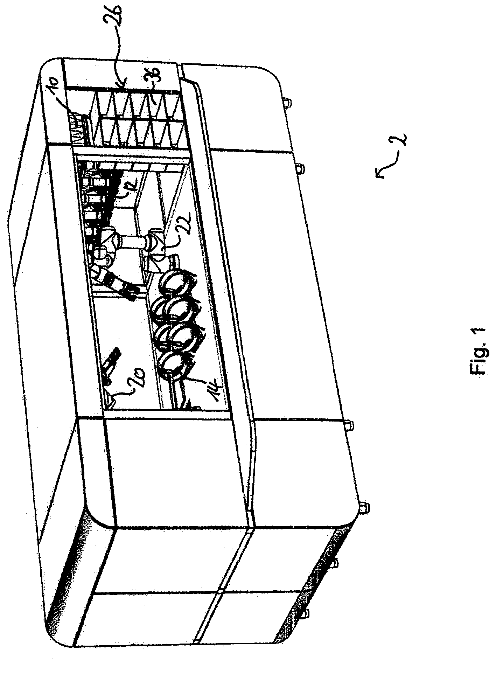

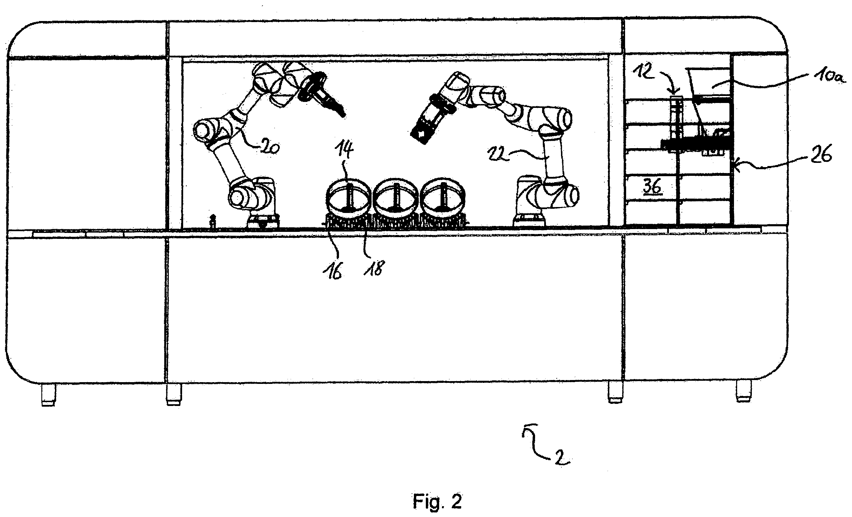

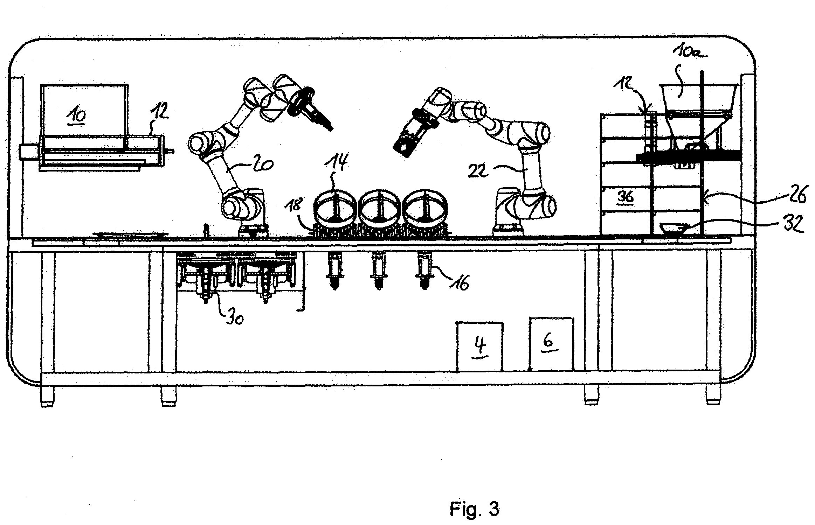

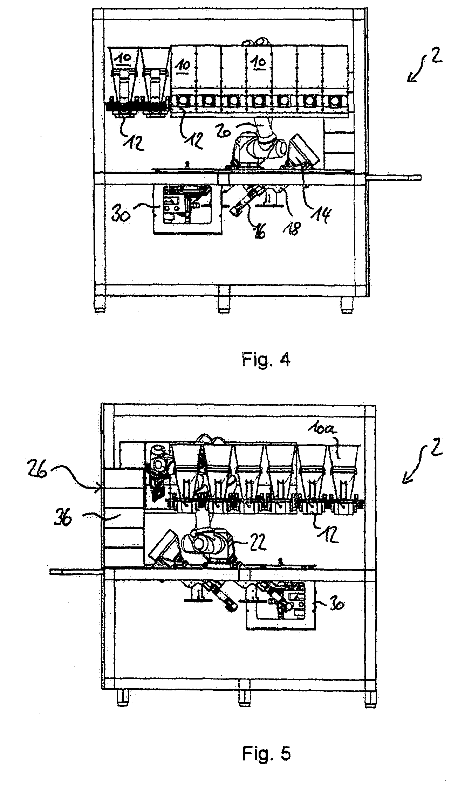

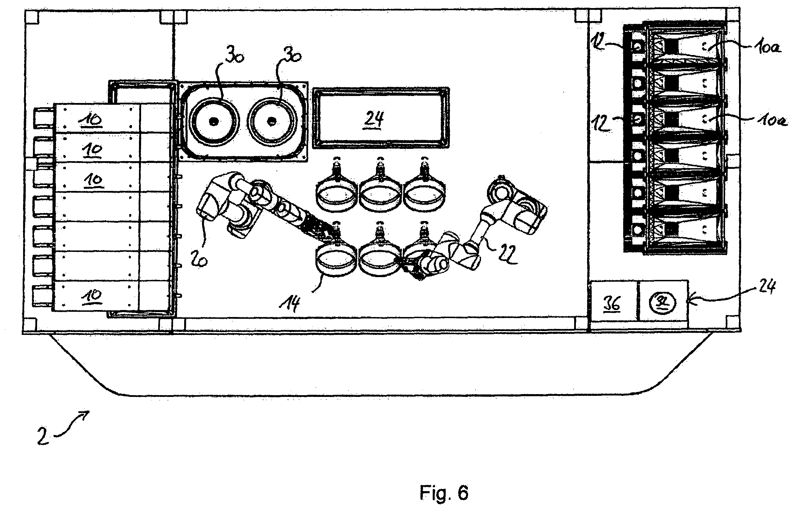

Die Figuren 1 bis 6 zeigen verschiedene Perspektiven einer bevorzugten Ausführungsform der Vorrichtung zum automatisierten Zubereiten von Nahrungsmitteln, wobei teilweise die die Vorrichtung umschließende Wandung nicht gezeigt ist.

Die in den Figuren 1 bis 6 gezeigte Vorrichtung 2 zum automatisierten Zubereiten von Nahrungsmitteln weist folgende Elemente auf: zumindest eine Steuereinrichtung 4, zumindest eine Kommunikationseinrichtung 6, zumindest ein Aufbewahrungsbehälter 10, zumindest eine Spendereinrichtung 12, zumindest ein Zubereitungsgefäß 14, zumindest eine Mischeinrichtung 16, zumindest eine Heizeinrichtung 18, ein erster Manipulator 20, ein zweiter Manipulator 22, zumindest eine Übergabestation 24, zumindest eine Ausgabestation 26, zumindest eine Temperiereinrichtung 28, zumindest Hygieneeinrichtung 30.

Wie in den Figuren 1 bis 6 gezeigt kann die Vorrichtung 2 zweckmäßigerweise eine Vielzahl von Aufbewahrungsbehältern 10 aufweisen. In jedem der Aufbewahrungsbehälter wird ein zugeordnetes Nahrungsmittel aufbewahrt. Es versteht sich, dass die Aufbewahrungsbehälter in Abhängigkeit von der Konsistenz, Form, Größe und weiteren Eigenschaften der Nahrungsmittel unterschiedlich geformt sein können und je nach Bedarf an diesem Nahrungsmittel ein unterschiedliches Innenvolumen aufweisen können.

Entsprechend der Anzahl der Aufbewahrungsbehälter 10 kann die Vorrichtung 2 eine Vielzahl von Spendereinrichtungen 12 aufweisen. Insbesondere ist jedem Aufbewahrungsbehälter 10 genau eine Spendereinrichtung 12 zugeordnet. Die Spendereinrichtungen 12 sind ausgelegt, um ein Nahrungsmittel aus einem der Aufbewahrungsbehälter 10 ins das Zubereitungsgefäß 14 oder das Serviergefäß 32 zu fördern.

Es können Aufbewahrungsbehälter 10 vorgesehen sein, welche ein Nahrungsmittel aufbewahren, dass später im Zubereitungsgefäß 14 zubereiten bzw. erwärmt bzw. gekocht bzw. gebratet bzw. geröstet wird. Davon verschieden können Aufbewahrungsbehälter vorgesehen sein, welche Nahrungsmittel enthalten, welche vorgesehen sind, um nach dem Zubereiten der Speise in das Serviergefäß 32 eingebracht zu werden.

Da die Nahrungsmittel unterschiedliche Konsistenz aufweisen können, beispielsweise in flüssiger, fester, pastöser, pulverförmiger, trockener, gemahlener, körniger, granularer bzw. stückiger Form oder Gemischen vorliegen können, können die Aufbewahrungsbehälter 10, 10a unterschiedlich ausgebildet sein. Aufbewahrungsbehälter 10, 10a können beispielsweise aus, insbesondere formstabilen oder zusammenfaltbaren bzw. zusammendrückbaren, Kunststoffen, Glas oder Metall, insbesondere korrosionsfreiem Stahl, ausgebildet sein. Des Weiteren können die Aufbewahrungsbehälter 10, 10a als Mehrwegbehälter, insbesondere reinigbar bzw. spülbar ausgebildet sein oder als Einwegbehälter ausgebildet sein.

Die Spendereinrichtung 12 sind ausgelegt, um das in dem zugeordneten Aufbewahrungsbehälter 10, 10a aufbewahrte Nahrungsmittel zu fördern. Spendereinrichtungen 12 sind daher dem Inhalt des zugeordneten Aufbewahrungsbehälter 10, 10a angepasst. Bevorzugt kann die Spendereinrichtung 12 eine peristaltische Pumpe, beispielsweise für Ketchup, oder einen Schneckenförderer, beispielsweise für Reis oder Nudeln, oder einen Schaufelradförderer, beispielsweise für Nüsse, oder einen pneumatischen Förderer, beispielsweise für Puderzucker, oder einen Saugförderer, beispielsweise für Schokoladensplitter, oder einen Vibrationsförderer, beispielsweise für gehackte Pistazien aufweisen.

Das Zubereitungsgefäß 14, in welchem die Nahrungsmittel aus den Aufbewahrungsbehältern eingefüllt werden, ist hitzebeständig ausgebildet, da die Speisen in der Regel erhitzt werden. Da das Erhitzen bevorzugt durch eine Induktionswärmequelle 18 als bevorzugte Heizeinrichtung 18 erfolgt, aber alternativ auch durch eine Gasflamme oder eine elektrische Widerstandsheizung erfolgen kann, ist das Zubereitungsgefäß 14 zweckmäßigerweise aus einem Metall ausgebildet.

Das Zubereitungsgefäß 14 hat in der gezeigten bevorzugten Ausführungsform eine im Wesentlichen konische bzw. trichterförmig Gestalt. Die Rotationsachse bildet dabei eine bevorzugte Richtung aus. Dabei können die Nahrungsmittel entlang einer Einfüllrichtung E, die parallel zur Rotationsachse verläuft in das Zubereitungsgefäß 14 eingebracht werde.

Ebenfalls kann sich ein Handhabungselement im Wesentlichen entlang der Rotationsachse erstrecken, mit welchen das Zubereitungsgefäß 14 gehandhabt werden kann. Das Handhaben kann die zumindest bereichsweise Aufnahme des Handhabungselements in einem komplementären Handhabungselement der Mischeinrichtung 16 umfassen, das heißt die Kopplung von Zubereitungsgefäß 14 und Mischeinrichtung. Das Handhaben kann auch das Greifen des Handhabungselements durch einen Endeffektor des ersten Manipulators 20 umfassen. Das Handhaben und Koppeln kann auch getrennt voneinander erfolgen und das Handhabungselement des Zubereitungsgefäßes nur der Positionierung desselben durch den ersten Manipulator dienen.

Durch die zumindest bereichsweise Aufnahme des Zubereitungsgefäßes 14 bzw. dessen Handhabungselements in der Mischeinrichtung 16, kann Zubereitungsgefäß 14 bewegt werden, insbesondere um die darin enthaltenen Nahrungsmittel so durcheinanderzurühren, zu schütteln und/oder durch Zwang bzw. Rotation zu mischen, dass eine im Wesentlichen homogene Masse bzw. ein Gemisch entsteht.

Die gezeigte bevorzugte Ausführungsform weist einen Knickarmroboter auf, welcher als erster Manipulator 20 dient. Es versteht sich, dass auch andere Typen von Robotern eingesetzt werden können, wie beispielsweise SCARA oder Delta Roboter.

Der erste Manipulator 20 weist einen Endeffektor am distalen Endglied auf, der das Zubereitungsgefäß 14 am Handhabungselement greifen kann. Der erste Manipulator 20 kann insbesondere desinfizierbar bzw. lebensmittelecht ausgebildet sein, beispielsweise aus einem korrosionsfreien Metall bzw. einem chemisch inerten Material beispielsweise aus Edelstahl oder einem chemisch resistenten Kunststoff.

Der erste Manipulator 20 hat in einem mit der Vorrichtung durchgeführten Verfahren zur Zubereitung von Speisen die Aufgabe ein Zubereitungsgefäß 14 zu greifen und dieses gemäß einem Rezept nacheinander an zumindest zwei ausgewählte Spendereinrichtungen 12 derart zu positionieren, dass die Spendereinrichtungen 12 gemäß dem Rezept die notwendigen Nahrungsmittel in das Zubereitungsgefäß 14 füllen können. Die einzelnen dazu notwendigen Bewegungen werden von einer Manipulatorsteuerung 34 gesteuert bzw. geregelt. Die zu einem Rezept zugehörigen Bewegungsabläufe können ebenfalls in der Manipulatorsteuerung 34 gespeichert sein oder werden bei Bedarf von einer anderen Steuerung an die Manipulatorsteuerung 34 übertragen.

Nach dem Einfüllen der Nahrungsmittel in das Zubereitungsgefäß 14 wird dieses mit dem ersten Manipulator 20 zur Mischeinrichtung 16 und/oder Heizeinrichtung 18 gefahren und dort abgelegt. Die Mischeinrichtung 16 und/oder Heizeinrichtung 18 kann dazu das Zubereitungsgefäß mit einer komplementären Halteeinrichtung aufnehmen. Die Zeit, in welcher die Nahrungsmittel in dem Zubereitungsgefäß 14 gemischt und/oder erhitzt werden kann etwa 1 Minute bis etwa 5 Minuten, bevorzugt etwa 3 Minuten dauern. In der Zwischenzeit kann der erste Manipulator ein weiteres Zubereitungsgefäß 14 handhaben. Daher sind in der Vorrichtung 2 bevorzugt mehrere Zubereitungsgefäße und Mischeinrichtungen 16 und/oder Heizeinrichtungen 18 vorgesehen. Bevorzugt können 2 bis 10, besonders bevorzugt 4 bis 8, insbesondere 6 Zubereitungsgefäße 14 zum gleichzeitigen Gebrauch vorgesehen sein.

Nach dem Mischen und/oder Erhitzen der Speise kann das Zubereitungsgefäß in einem weiteren Schritt des Verfahren mittels des ersten Manipulators 20 zu einer Übergabestation 24 verlagert werden, um den Inhalt des Zubereitungsgefäßes 14 in das Serviergefäß 32 umzufüllen. Das Umfüllen kann insbesondere in einem Bereich der Übergabestation 24 liegen, der sowohl im Arbeitsbereich des ersten Manipulators 20 liegt, als auch in einem Arbeitsbereich des zweiten Manipulators 22, der auslegt ist das Serviergefäß 32 zu handhaben.

Der zweite Manipulator 22 kann in einem weiteren Schritt des Verfahrens das Serviergefäß 32 greifen und dieses gemäß dem Rezept nacheinander an zumindest einer ausgewählten Spendereinrichtungen 12 derart positionieren, dass die Spendereinrichtung 12 gemäß dem Rezept die notwendigen Nahrungsmittel, beispielsweise ein Topping, in das Serviergefäß 32 füllen kann. Die einzelnen dazu notwendigen Bewegungen werden von der Manipulatorsteuerung 34 oder einer weiteren Manipulatorsteuerung gesteuert bzw. geregelt. Die zu dem Rezept zugehörigen Bewegungsabläufe des zweiten Manipulators 22 können ebenfalls in der Manipulatorsteuerung 34 bzw. der weiteren Manipulatorsteuerung gespeichert sein oder werden bei Bedarf von einer anderen Steuerung an die Manipulatorsteuerung 34 bzw. die weitere Manipulatorsteuerung übertragen.

Die in den Figuren 1 bis 6 gezeigte Vorrichtung 2 weist des Weiteren eine Ausgabestation 26, in welcher das Serviergefäß 32 in einem weiteren Schritt verlagert wird, um für die Ausgabe an den Benutzer bereitgestellt zu werden. Die Ausgabestation 26 kann mehrerer Ausgabefächer 36 aufweisen, so dass vorteilhafterweise mehrere zubereitete Speisen für mehrere Benutzer gleichzeitig zur Abholung bereitgestellt werden können. Zweckmäßigerweise ist jedes Ausgabefach 36 derart ausgebildet, dass nur ein Bereitstellen einer Speise in das Ausgabefach 36 durch denn zweiten Manipulator 22 erfolgen kann oder ein Öffnen des Ausgabefach 36 in Richtung des Benutzers zur Entnahme der Speise. Vorteilhafterweise wird so ein Durchgriff in die Vorrichtung 2 durch den Benutzer verhindert.

Während Serviergefäße 32 als Einweg- oder Mehrweggeschirr aus der Vorrichtung 2 ausgegeben werden, verbleibt das Zubereitungsgefäß 14 zur weiteren Verwendung in der Vorrichtung 2. Dazu muss das Zubereitungsgefäß 14 zunächst in einem weiteren Schritt gereinigt werden. Dazu ist zumindest eine Hygieneeinrichtung 30 vorgesehen, welche als Spüleinrichtung ausgebildet ist. Diese ist ausgelegt, dass zumindest eine Zubereitungsgefäß 14 nach Gebrauch mit kaltem und/oder heißem Wasser zu spülen. Insbesondere kann das Wasser mit Druck in das Zubereitungsgefäß 14 gesprüht werden, um die dort vorhandenen Nahrungsmittelreste zu entfernen. Alternativ oder zusätzlich eine Reinigungsbürste vorgesehen sein, welches das Zubereitungsgefäß 14 mechanisch reinigt. Besonders bevorzugt kann das Zubereitungsgefäß 14 abschließend mit warmer bzw. heißer Luft getrocknet werden, um sofort wieder einsatzbereit zu sein.

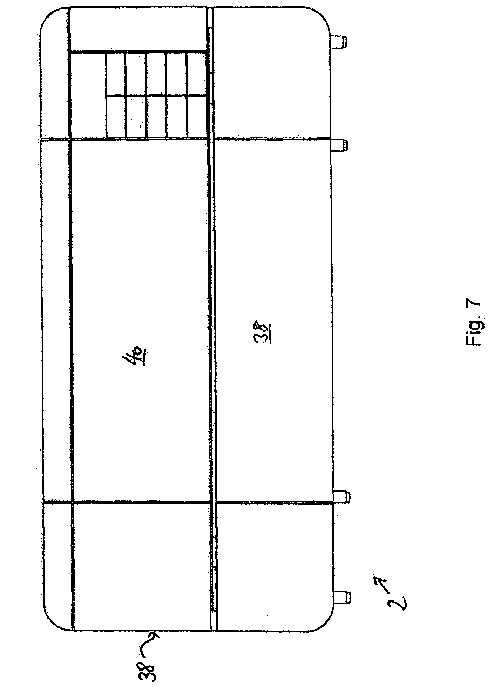

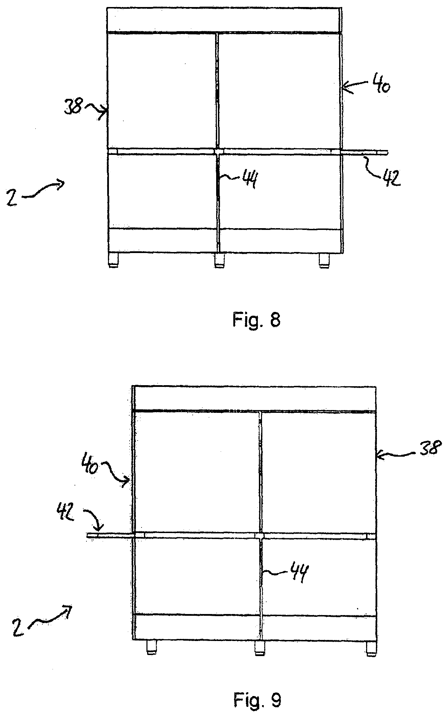

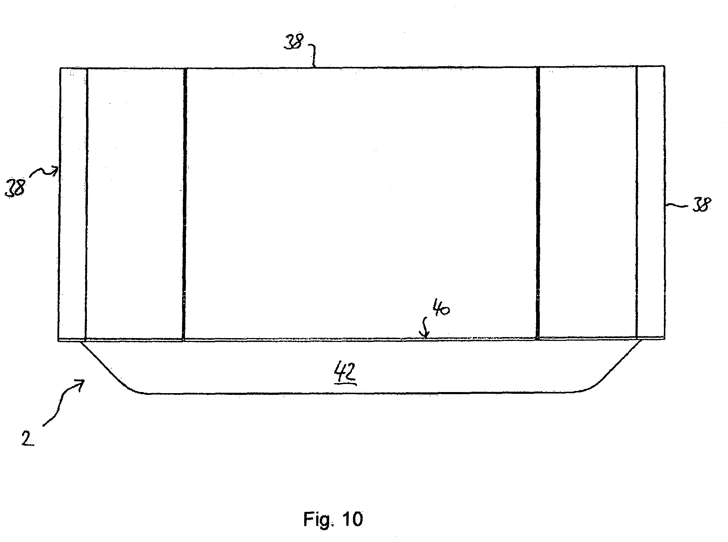

Die Figuren 7 bis 10 zeigen verschiedene Ansichten einer Ausführungsform. Die Vorrichtung 2 ist durch eine Wandung 38 zumindest teilweise eingeschlossen bzw. begrenzt. Ein Fenster 40 kann vorgesehen sein, um einem Benutzer einen Einblick in die Vorrichtung 2 zu gewähren, so dass er dem Prozess der Zubereitung folgen kann. Bevorzugt kann eine Theke 42 vorgesehen sein, auf welcher der Benutzer Dinge abstellen kann.

Die durch die Wandung 38 vorgegebenen Dimensionen der Vorrichtung 2 sind vorzugsweise kleiner ist als die eines 20-Fuß-Standard-Containers, so daß ein Transport in einfacher Weise möglich ist. Weiter bevorzugt kann die Vorrichtung 2 für den Transport bzw. die Aufstellung am Betriebsort in Module zerlegbar sein. Dazu können Trennstellen 44 vorgesehen sein, an welchen die Wandung 38 bzw. die Vorrichtung 2 trennbar und wieder zusammenfügbar ist.

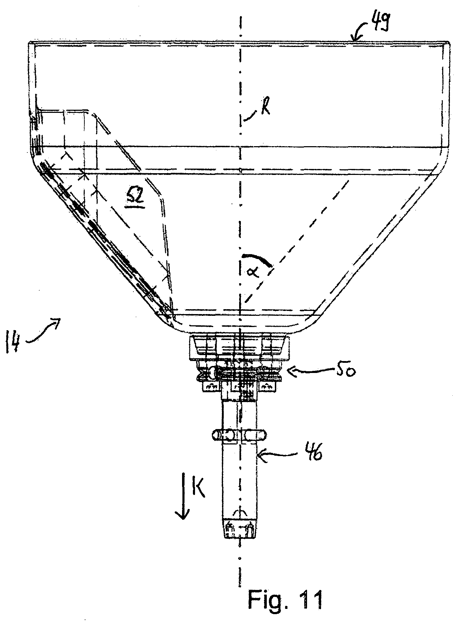

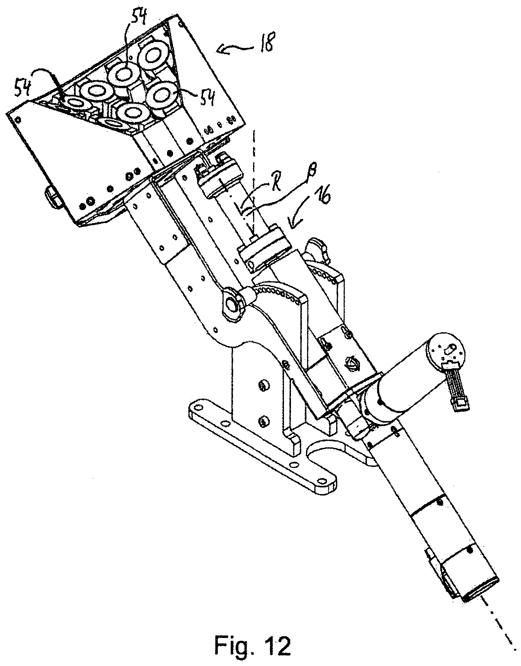

Die Figur 11 zeigt eine Ansicht eines erfindungsgemäßen Zubereitungsgefäßes 14. Das Zubereitungsgefäß 14 kann ein Koppelelement 46 aufweisen, welches sich im Wesentlichen entlang der Rotationsachse R, insbesondere mit dieser fluchtend, erstreckt. Das Koppelelement 46 ist ausgebildet mit einem komplementären Koppelelement 48 der Mischeinrichtung (in Figur 12 gezeigt) zusammenzuwirken, so dass das Zubereitungsgefäß 14 in der Mischeinrichtung 16 aufgenommen ist und in eine Rotation um die Rotationsachse R des Zubereitungsgefäßes 14 versetzt werden kann. Besonders bevorzugt könnte das Koppelelement 46 auch als Handhabungselement dienen, welches von einem Endeffektor des ersten Manipulators gegriffen werden kann. In der gezeigten Ausführungsform sind das Handhabungselement 50 und das Koppelelement 46 jedoch verschieden. Vorteilhafterweise kann so gleichzeitig ein Handhaben des Zubereitungsgefäßes 14 durch den ersten Manipulator und ein Koppeln des Zubereitungsgefäßes 14 an die Mischeinrichtung 16 erfolgen. Dadurch wird es in einfacher Weise möglich, das der erste Manipulator das Zubereitungsgefäß mit der Mischeinrichtung 16 koppelt und insbesondere erst nach dem Koppeln mit der Mischeinrichtung 16 ein Lösen des ersten Manipulators von der Handhabungseinrichtung 50 des Zubereitungsgefäßes 14 stattfindet.

Wie in Figur 11 gezeigt kann das Zubereitungsgefäß konisch bzw. trichterförmig ausgebildet sein, wobei die konusförmige Wandung des Zubereitungsgefäßes 14 mit der Rotationsachse einen Winkel α einschließt, der bevorzugt etwa 30 Grad bis etwa 60 Grad betragen kann. Die innere Wandung des Zubereitungsgefäßes 14 weist genau eine Rippe bzw. Finne bzw. Schöpfrinne 52 auf. Diese Rippe erstreckt sich bereichsweise radial nach innen, das heißt zur Rotationsachse R hin orientiert. Durch eine Rotation des Zubereitungsgefäßes 14 um die Rotationsachse R erfolgt mittels der Rippe 52 ein Durchmischen des Inhalts des Zubereitungsgefäßes 14. Das Zubereitungsgefäß weist ein Handhabungselement 50, welches sich im Wesentlichen entlang der Rotationsachse R erstreckt. Bevorzugt ist das Handhabungselement 50 an einer einer Einfüllöffnung 49 entgegengesetzten Seite des Zubereitungsgefäßes 14 angeordnet, so dass ein erster Manipulator (in Fig. 11 nicht gezeigt) mit einem Endeffektor das Handhabungselement 50 greifen kann, ohne das Partikel oder Fluide vom Endeffektor in die 49 und damit in die Speise gelangen können. Das Koppelelement 46 ist ausgelegt mit einem komplementären Koppelelement einer Mischeinrichtung zu koppeln, so dass die Mischeinrichtung ein Drehmoment auf das Koppelelement 46 ausüben kann und damit das Zubereitungsgefäß in eine Rotation und die Rotationsachse R versetzen kann. Das Koppelelement kann ausgelegt sein, durch eine Verlagerung entlang einer Einführrichtung K mit dem komplementäre Koppelelement zu koppeln. Bevorzugt kann die Einführrichtung K parallel zur Rotationsachse R verlaufen. Wie in der in Fig. 11 gezeigten bevorzugten Ausführungsform gezeigt, können Handhabungselement 50 und Koppelelement 46 verschieden sein und insbesondere entlang der Einführrichtung K voneinander beabstandet sein.

Figur 12 zeigt eine Ansicht einer Heizeinrichtung 18 mit einer kombinierten Mischeinrichtung 16. Die Mischeinrichtung 16 kann das Zubereitungsgefäß 14 um die Rotationsachse R in Rotation versetzen, um den Inhalt des Zubereitungsgefäßes 14 zu mischen. Bevorzugt schließt die Rotationsachse R des mit der Mischeinrichtung 16 gekoppelten Zubereitungsgefäßes 14 mit der Vertikalen einen Winkel β von etwa 30 Grad bis etwa 60 Grad ein, wenn das Durchmischen erfolgt. Es versteht sich das der Winkel β veränderbar sein kann, insbesondere motorisch veränderbar sein kann.

Figur 12 zeigt ebenfalls eine Heizeinrichtung 18, die das Zubereitungsgefäß 14 erhitzen kann. In der gezeigten bevorzugten Ausführungsform sind Induktionsspulen 54, die derart angeordnet sind, dass nur ein geringer Spalt von weniger als 10 mm, bevorzugt weniger als 5 mm insbesondere weniger als 1 mm zwischen den Induktionsspulen 54 und dem Zubereitungsgefäß 14 verbleibt. Die Mehrzahl von Induktionsspulen 54 kann dabei in einem Feld bzw. Array angeordnet sein, welches gebogen bzw. konkav ausgebildet ist, wobei insbesondere der Krümmungsradius entlang einer Orientierung in etwa dem Krümmungsradius des Zubereitungsgefäßes 14, welches im Bereich der Induktionsspulen 54 angeordnet werden soll, entspricht.

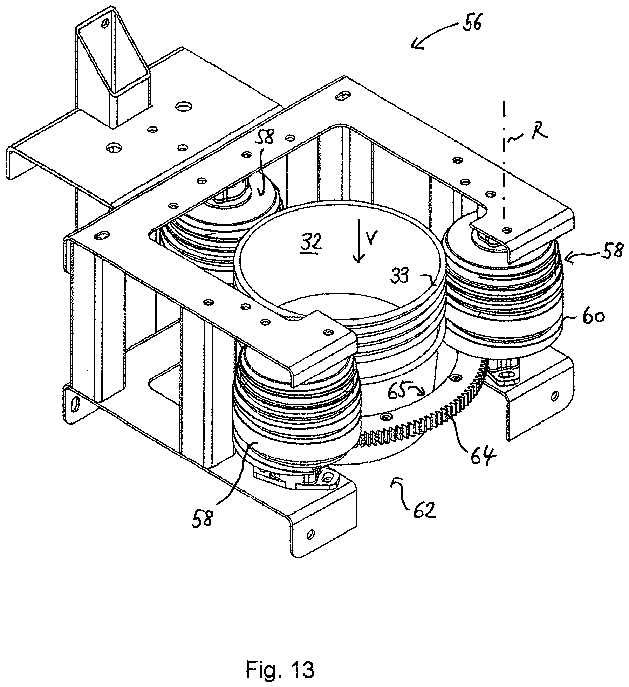

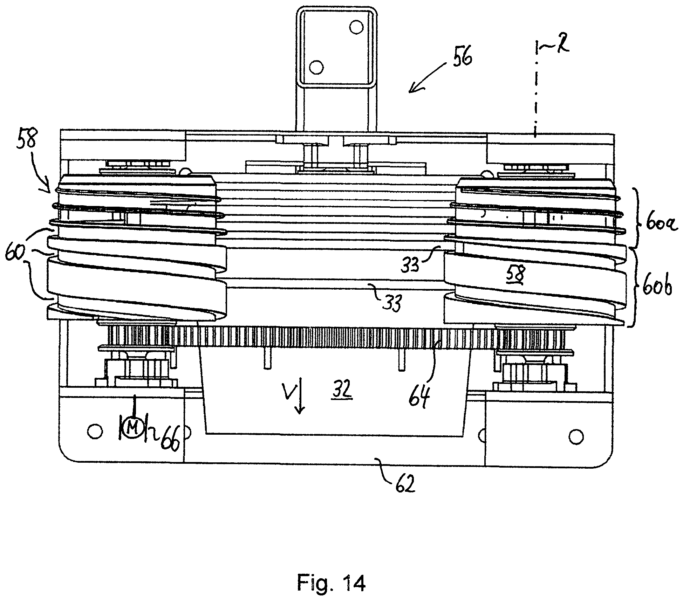

Die Figur 13 zeigt eine perspektivische Ansicht einer bevorzugten Ausführungsform einer Vereinzelungseinrichtung 56 für Serviergefäße 32 und die Figur 14 eine Seitenansicht der Vereinzelungseinrichtung 56 aus Figur 13, weshalb die mit gleichen Bezugszeichen versehenen Elemente in den Figuren 13 und 14 identische Elemente betreffen. Die Vereinzelungseinrichtung 56 kann als gesonderter Aspekt betrachtet werden und muss nicht zwangsweise kann jedoch vorzugsweise mit anderen Elementen der in dieser Anmeldung beschriebenen Vorrichtung 2 zum automatisierten Zubereiten von Nahrungsmitteln zusammenwirken.

Das Handhaben bzw. Bereitstellen des Serviergefäßes durch den zweiten Manipulator kann insbesondere auch ein Vereinzeln des Serviergefäßes aus einem Stapel von Serviergefäßen beinhalten. Dazu kann der zweite Manipulator ein Serviergefäß aus einer Vereinzelungseinrichtung entnehmen. Die Vereinzelungseinrichtung 56 ist ausgelegt, einen Stapel von Serviergefäßen 32 zu halten. Das Halten kann durch mehrere, insbesondere drei oder vier, Aktuatoren 58 durch Reibschluss und/oder Formschluss erfolgen. Jeder der Aktuatoren 58 kann um eine Rotationsachse R drehbar gelagert sein. Die Aktuatoren 58 können im Wesentlichen zylindrisch ausgebildet sein, wobei eine Nut 60 im Zylindermantel ausgebildet sein kann, welche insbesondere dazu ausgelegt ist, mit einem vorgewölbten oder verdickten Rand 33 des Serviergefäßes in Eingriff zu gelangen.

Die Nut 60 kann einen Schneckengang bzw. einen Gewindegang ausbilden. Mit anderen Worten weist die Nut 60 eine Steigung auf bzw. ist relativ zur Rotationsachse R um einen Winkel verschieden von 90 Grad orientiert. Dadurch dass der Rand 33 des Serviergefäßes 32 in die Nut 60 eingreift, kann der Rand 33 durch die Nut 60 während einer Rotation des Aktuators 58 um die Rotationsachse R geführt und damit das Serviergefäß 32 in Abhängigkeit von der Steigung der Nut bzw. des Schneckengangs bzw. Gewindegangs und der Rotationsgeschwindigkeit geführt bzw. verlagert werden kann. Die Verlagerung kann dabei entlang einer Verlagerungsrichtung V parallel zur Rotationsachse R hin zu einer Ausgabeöffnung 62 erfolgen.

Wie in der Figur 14 gezeigt muss die Steigung der Nut 60 des Aktuators nicht konstant sein, sondern kann vielmehr derart ausgebildet sein, dass die Steigung der Nut 60 zur Ausgabeöffnung 62 hin stetig größer wird. Dadurch wird vorteilhafterweise erreicht, dass zu Beginn des Vereinzelungsschrittes eine höhere Kraft zum Ablösen des untersten Serviergefäßes vom Serviergefäßstapel aufgebracht werden kann und die Verlagerungsgeschwindigkeit zur Ausgabeöffnung 62 hin steigt, sofern die Rotationsgeschwindigkeit konstant bleibt. Des Weiteren kann wie in Figur 14 gezeigt in jeder Windung der Nut 60 bzw. des Schneckengangs ein Rand 33 eines zugeordneten Serviergefäßes angeordnet sein bzw. in Eingriff befindlich sein. Das Vereinzeln erfolgt durch eine Drehung des Aktuators 58 wobei im oberen Teil, dort wo das Serviergefäß 32 noch mit dem Stapel, insbesondere durch Haftreibung, verbunden ist, eine geringere vertikale Verlagerung als im unteren Teil, der näher zur Ausgabeöffnung 62 liegt, wo das Serviergefäß 32 bereits vom Stapel gelöst ist. Mit anderen Worten nimmt bei gleichmäßiger Drehung des Aktuators 58 die Verlagerungsgeschwindigkeit von oben nach unten zu, während die auf den Rand des Serviergefäß 32 übertragene Kraft von oben nach unten abnimmt. Dies ist vorteilhaft, da bei einer Vereinzelung des Serviergefäß 32 entlang der Schwerkraft die aufzubringende Kraft von oben (zum Überwinden der Haftreibung) nach unten (nach dem Lösen) abnimmt. Da wie in Figur 14 gezeigt ein Teil des Stapels von Serviergefäßen 32 in einem ineinandergeschobenen Zustand ist und lediglich das unterste Serviergefäß 32 von dem Stapel gelöst werden soll, weist ein Aktuator 58 bevorzugt einen ersten Bereich 60a auf, in welchem die Steigung der Nut 60 konstant ist und einen zweiten Bereich 60b, in welchem die Steigung der Nut 60 von der Steigung im ersten Bereich 60a verschieden ist, wobei die Steigung der Nut 60 im zweiten Bereich 60b vorzugsweise zunimmt bzw. nicht konstant ist.

Zum synchronen Drehen bzw. Rotieren von zwei oder mehr Aktuatoren 58 kann ein (Zahn-)Riemen , eine Kette oder ein Zahnkranz 64 vorgesehen sein, welcher die Aktuatoren 58 untereinander mechanisch und optional mit einem Antrieb 66 verbindet. Insbesondere kann ein Aktuator 58 direkt mit dem Antrieb 66 verbunden sein. Vorteilhafterweise kann eine synchrone Betätigung der Aktuatoren 58 mit nur einem einzigen Antrieb erfolgen. Für den Fall, dass ein Zahnkranz 64 (wie in den Figuren 13 und 14 gezeigt) vorgesehen ist, kann dieser eine mittlere Öffnung 65 aufweisen, durch welche die Serviergefäße 32 hindurch entlang der Verlagerungsrichtung V verlagerbar sind.

### Bezugszeichenliste

- 2: Vorrichtung
- 4: Steuereinrichtung
- 6: Kommunikationseinrichtung
- 10: Aufbewahrungsbehälter
- 12: Spendereinrichtung
- 14: Zubereitungsgefäß
- 16: Mischeinrichtung
- 18: Heizeinrichtung
- 20: erster Manipulator
- 22: zweiter Manipulator
- 24: Übergabestation
- 26: Ausgabestation
- 30: Hygieneeinrichtung
- 32: Serviergefäß
- 33: Rand des Serviergefäßes 32
- 34: Manipulatorsteuerung
- 36: Ausgabefach
- 38: Wandung
- 40: Fenster
- 42: Theke
- 44: Trennstelle
- 46: Koppelelement
- 48: komplementäres Koppelelement
- 49: Einfüllöffnung
- 50: Handhabungselement
- 52: Rippe
- 54: Induktionsspulen
- 56: Vereinzelungseinrichtung
- 58: Aktuator
- 60: Nut
- 62: Ausgabeöffnung
- 64: Zahnkranz
- 65: Mittlere Öffnung des Zahnkranzes 64
- 66: Antrieb
- K: Einführrichtung
- R: Rotationsachse
- V: Verlagerungsrichtung

## Patentansprüche

1. Vorrichtung (2) zum automatisierten Zubereiten von Nahrungsmitteln, wobei die Vorrichtung aufweist:
- zumindest ein Zubereitungsgefäß (14), welches im Wesentlichen rotationssymmetrisch um eine Rotationsachse (R) ausgebildet und ausgelegt ist, zumindest ein Nahrungsmittel aufzunehmen;
- zumindest eine Mischeinrichtung (16), welche ausgelegt ist, den Inhalt des Zubereitungsgefäßes (14) zu durchmischen;
wobei das Zubereitungsgefäß (14) ein Koppelelement (46) aufweist, welches sich im Wesentlichen entlang der Rotationsachse (R) erstreckt, **gekennzeichnet dadurch, dass** das Koppelelement (46) ausgebildet ist mit einem komplementären Koppelelement (48) der Mischeinrichtung (16) zusammenzuwirken, so dass das Zubereitungsgefäß (14) in der Mischeinrichtung (16) aufgenommen ist und in eine Rotation um die Rotationsachse (R) des Zubereitungsgefäßes (14) versetzt werden kann, wobei die Vorrichtung (2) weiter aufweist:
- zumindest einen ersten Manipulator (20), welcher ausgelegt ist, das zumindest eine Zubereitungsgefäß (14) zu handhaben..

2. Vorrichtung (2) gemäß Anspruch 1, wobei die innere Wandung des Zubereitungsgefäßes (14) genau eine, zwei oder mehr Rippe(n) bzw. Finne(n) bzw. Schöpfrinne(n) aufweist, welche sich insbesondere bereichsweise radial nach innen erstreckt oder erstrecken.

3. Vorrichtung (2) gemäß Anspruch 1 oder 2, wobei der Manipulator (20) einen Endeffektor am distalen Endglied ausweist, wobei der Endeffektor ausgelegt ist, das Zubereitungsgefäß zu greifen.

4. Vorrichtung (2) gemäß Anspruch 2 oder 3, wobei das Zubereitungsgefäß (14) ein Handhabungselement (50) aufweist, welches insbesondere vom Koppelelement (46) verschieden ist, wobei das Handhabungselement (50) von einem Endeffektor des ersten Manipulators (20) gegriffen werden kann.

5. Vorrichtung (2) gemäß Anspruch 2 oder 3, wobei der Endeffektor mit dem Handhabungselement (50) in Reibschluß und/oder Formschluß gelangen kann und insbesondere mit dem Handhabungselement (50) verriegeln kann.

6. Vorrichtung (2) gemäß einem der vorherigen Ansprüche, weiter aufweisend:
- zumindest eine Übergabestation (24), in welcher der Inhalt des Zubereitungsgefäßes (14) einem Serviergefäß (32) übergeben wird.

7. Vorrichtung (2) gemäß Anspruch 6, weiter aufweisend:
- zumindest einen Manipulator (22), welcher ausgelegt ist, das zumindest eine Serviergefäß (32) zu handhaben.

8. Vorrichtung (2) gemäß Anspruch 6 oder 7, wobei der Manipulator (22), welcher ausgelegt ist, das zumindest eine Serviergefäß (32) zu handhaben, ein zweiter Manipulator (22) ist, der verschieden ist von dem ersten Manipulator (20) ist, welcher ausgelegt ist, das zumindest eine Zubereitungsgefäß (14) zu handhaben.

9. Vorrichtung (2) gemäß einem der Ansprüche 6 bis 8, weiter aufweisend:
- zumindest eine Ausgabestation (24), in welcher das Serviergefäß (32) aus der Vorrichtung (2) ausgegeben wird.

10. Verfahren zum automatischen Zubereiten von Nahrungsmitteln unter Verwendung einer Vorrichtung gemäß einem der Ansprüche 1 bis 9, wobei das Verfahren zumindest einen der folgenden Verfahrensschritte aufweist:
- Greifen eines Handhabungselements (50) eines Zubereitungsgefäßes durch einen Endeffektor eines ersten Manipulators;
- Positionieren des Zubereitungsgefäßes mittels des ersten Manipulators gemäß einem ausgewählten Rezept nacheinander an zumindest zwei Spendereinrichtungen, wobei die Spendereinrichtungen gemäß dem Rezept die notwendigen Nahrungsmittel in das Zubereitungsgefäß füllen;
- Positionieren des Zubereitungsgefäßes mittels des ersten Manipulators an der Mischeinrichtung, wobei ein Koppelelement (46) des Zubereitungsgefäßes mit einem komplementären Koppelelement (48) der Mischeinrichtung (16) zusammenwirkt, so dass das Zubereitungsgefäß (14) in der Mischeinrichtung (16) aufgenommen wird und in eine Rotation um die Rotationsachse (R) des Zubereitungsgefäßes (14) versetzt werden kann;
- Mischen des Inhalts des Zubereitungsgefäßes mittels der Mischeinrichtung.

11. Verfahren gemäß Anspruch 10, mit zumindest einem der weiteren Schritte:
- Verlagern des Zubereitungsgefäßes mittels des ersten Manipulators zu einer Übergabestation;
- Bereitstellen eines Serviergefäßes, bevorzugt durch Vereinzeln aus einem Stapel von Serviergefäßen;
- Umfüllen des Inhalts des Zubereitungsgefäßes in das bereitgestellte Serviergefäß, wobei während des Bereitstellens und/oder des Umfüllens ein zweiter Manipulator das Serviergefäß handhabt.

12. Verfahren gemäß Anspruch 11, mit zumindest einem der weiteren Schritte
- Positionieren des Serviergefäßes mittels des zweiten Manipulators gemäß dem Rezept nacheinander an zumindest einer ausgewählten Spendereinrichtung;
- Einfüllen von zumindest einem Nahrungsmittel mittels der Spendereinrichtung.

13. Verfahren gemäß einem der Ansprüche 11 bis 12, mit zumindest einem der
weiteren Schritte:
- Verlagern des Serviergefäßes an bzw. in eine Ausgabestation, um für die Ausgabe an den Benutzer bereitgestellt zu werden;
- Identifizieren des Benutzers und Freigabe der Ausgabestation, in welcher sich die dem Benutzer zugeordnete Speise in dem Serviergefäß befindet;
- Reinigen des Zubereitungsgefäßes zur weiteren Verwendung;

14. Verfahren gemäß einem der Ansprüche 10 bis 13, mit zumindest einem der Schritte
- Eingang eines Auftrags zur Zubereitung einer Speise in einer Steuereinrichtung;
- Auswahl eines zur Speise zugeordneten Rezeptes durch die Steuereinrichtung;
- Auswahl eines zur Speise zugeordneten Zubereitungsgefäßes durch die Steuereinrichtung.

## Claims

1. Device (2) for the automated preparation of food, the device comprising:
- at least one preparation vessel (14) which is substantially rotationally symmetrical about a rotation axis (R) and is designed to accommodate at least one foodstuff;
- at least one mixing device (16) which is designed to mix the contents of the preparation vessel (14);
wherein the preparation vessel (14) has a coupling element (46) which extends substantially along the axis of rotation (R),
**characterized in that** coupling element (46) is designed to cooperate with a complementary coupling element (48) of the mixing device (16), so that the preparation vessel (14) is received in the mixing device (16) and can be set in rotation about the axis of rotation (R) of the preparation vessel (14),
wherein the device (2) further comprises:
- at least one first manipulator (20) which is designed to handle the at least one preparation vessel (14).

2. Device (2) according to claim 1, wherein the inner wall of the preparation vessel (14) has exactly one, two or more rib(s) or fin(s) or scoop(s) which extend or extend radially inwards in particular in regions.

3. Device (2) according to claim 1 or 2, wherein the manipulator (20) has an end effector on the distal end member, the end effector being designed to grip the preparation vessel.

4. Device (2) according to claim 2 or 3, wherein the preparation vessel (14) has a handling element (50) which is in particular different from the coupling element (46), wherein the handling element (50) can be gripped by an end effector of the first manipulator (20).

5. Device (2) according to claim 2 or 3, wherein the end effector can come into frictional engagement and/or positive engagement with the handling element (50) and in particular can lock with the handling element (50).

6. Device (2) according to one of the preceding claims, further comprising:
- at least one transfer station (24) in which the contents of the preparation vessel (14) are transferred to a serving vessel (32).

7. Device (2) according to claim 6, further comprising:
- at least one manipulator (22) which is designed to handle the at least one serving vessel (32).

8. Device (2) according to claim 6 or 7, wherein the manipulator (22) which is designed to handle the at least one serving vessel (32) is a second manipulator (22) which is different from the first manipulator (20) which is designed to handle the at least one preparation vessel (14).

9. Device (2) according to one of claims 6 to 8, further comprising:
- at least one dispensing station (24) in which the serving vessel (32) is dispensed from the device (2).

10. A method for automatically preparing food using a device according to one of claims 1 to 9, wherein the method comprises at least one of the following method steps:
- gripping a handling element (50) of a preparation vessel by an end effector of a first manipulator;
- positioning the preparation vessel by means of the first manipulator according to a selected recipe one after the other at at least two dispensing devices, wherein the dispensing devices fill the necessary foodstuffs into the preparation vessel according to the recipe;
- positioning the preparation vessel by means of the first manipulator on the mixing device, wherein a coupling element (46) of the preparation vessel interacts with a complementary coupling element (48) of the mixing device (16) so that the preparation vessel (14) is received in the mixing device (16) and can be set into rotation about the axis of rotation (R) of the preparation vessel (14);
- Mixing the contents of the preparation vessel using the mixing device.

11. Method according to claim 10, with at least one of the further steps:
- Moving the preparation vessel to a transfer station by means of the first manipulator;
- Providing a serving vessel, preferably by isolating it from a stack of serving vessels;
- Transferring the contents of the preparation vessel into the provided serving vessel, wherein a second manipulator handles the serving vessel during the preparation and/or transferring.

12. Method according to claim 11, with at least one of the further steps:
- positioning the serving vessel by means of the second manipulator according to the recipe one after the other at at least one selected dispensing device;
- Filling at least one food item using the dispenser.

13. Method according to one of claims 11 to 12, with at least one of the further steps:
- Moving the serving vessel to or into a dispensing station to make it available for dispensing to the user;
- Identifying the user and releasing the dispensing station in which the food assigned to the user is located in the serving vessel;
- Cleaning the preparation vessel for further use;

14. Method according to one of claims 10 to 13, comprising at least one of the steps:
- receipt of an order for the preparation of a meal in a control device;
- Selection of a recipe associated with the dish by the control device;
- Selection of a preparation vessel assigned to the food by the control device.

## Revendications

1. Dispositif (2) de préparation automatisée d'aliments, le dispositif comprenant :
- au moins un récipient de préparation (14) sensiblement symétrique de révolution autour d'un axe de rotation (R) et conçu pour recevoir au moins un aliment ;
- au moins un dispositif de mélange (16) qui est conçu pour mélanger le contenu du récipient de préparation (14) ;
dans lequel le récipient de préparation (14) comporte un élément de couplage (46) qui s'étend sensiblement le long de l'axe de rotation (R),
**caractérisé en ce que** l'élément d'accouplement (46) est conçu pour coopérer avec un élément d'accouplement complémentaire (48) du dispositif de mélange (16), de sorte que le récipient de préparation (14) est reçu dans le dispositif de mélange (16) et peut être mis en rotation autour de l'axe de rotation (R) du récipient de préparation (14),
dans lequel le dispositif (2) comprend en outre :
- au moins un premier manipulateur (20) qui est conçu pour manipuler le ou les récipients de préparation (14).

2. Dispositif (2) selon la revendication 1, dans lequel la paroi intérieure du récipient de préparation (14) présente exactement une, deux ou plusieurs nervures ou ailette(s) ou écope(s) qui s'étendent ou s'étendent radialement vers l'intérieur notamment dans certaines régions.

3. Dispositif (2) selon la revendication 1 ou 2, dans lequel le manipulateur (20) comporte un effecteur d'extrémité sur l'élément d'extrémité distale, l'effecteur d'extrémité étant conçu pour saisir le récipient de préparation.

4. Dispositif (2) selon la revendication 2 ou 3, dans lequel le récipient de préparation (14) présente un élément de manipulation (50) qui est notamment différent de l'élément d'accouplement (46), l'élément de manipulation (50) pouvant être saisi par un effecteur terminal du premier manipulateur (20).

5. Dispositif (2) selon la revendication 2 ou 3, dans lequel l'effecteur terminal peut venir en prise par friction et/ou en prise positive avec l'élément de manipulation (50) et peut en particulier se verrouiller avec l'élément de manipulation (50).

6. Dispositif (2) selon l'une des revendications précédentes, comprenant en outre :
- au moins un poste de transfert (24) dans lequel le contenu du récipient de préparation (14) est transféré vers un récipient de service (32).

7. Dispositif (2) selon la revendication 6, comprenant en outre :
- au moins un manipulateur (22) qui est conçu pour manipuler le ou les récipients de service (32).

8. Dispositif (2) selon la revendication 6 ou 7, dans lequel le manipulateur (22) qui est conçu pour manipuler le ou les récipients de service (32) est un deuxième manipulateur (22) qui est différent du premier manipulateur (20) qui est conçu pour manipuler le ou les récipients de préparation (14).

9. Dispositif (2) selon l'une des revendications 6 à 8, comprenant en outre :
- au moins un poste de distribution (24) dans lequel le récipient de service (32) est distribué à partir du dispositif (2).

10. Procédé de préparation automatique d'aliments à l'aide d'un dispositif selon l'une des revendications 1 à 9, dans lequel le procédé comprend au moins l'une des étapes de procédé suivantes :
- saisir un élément de manipulation (50) d'un récipient de préparation par un effecteur terminal d'un premier manipulateur ;
- positionner le récipient de préparation au moyen du premier manipulateur selon une recette sélectionnée l'un après l'autre au niveau d'au moins deux dispositifs de distribution, les dispositifs de distribution remplissant le récipient de préparation avec les aliments nécessaires selon la recette ;
- positionnement du récipient de préparation au moyen du premier manipulateur sur le dispositif de mélange, un élément de couplage (46) du récipient de préparation interagissant avec un élément de couplage complémentaire (48) du dispositif de mélange (16) de sorte que le récipient de préparation (14) soit reçu dans le dispositif de mélange (16) et puisse être mis en rotation autour de l'axe de rotation (R) du récipient de préparation (14) ;
- Mélanger le contenu du récipient de préparation à l'aide du dispositif de mélange.

11. Procédé selon la revendication 10, comprenant au moins l'une des étapes supplémentaires suivantes :
- Déplacement du récipient de préparation vers un poste de transfert au moyen du premier manipulateur ;
- Fournir un récipient de service, de préférence en l'isolant d'un empilement de récipients de service ;
- Transférer le contenu du récipient de préparation dans le récipient de service fourni, un deuxième manipulateur manipulant le récipient de service pendant la préparation et/ou le transfert.

12. Procédé selon la revendication 11, comprenant au moins l'une des étapes supplémentaires suivantes :
- positionner le récipient de service au moyen du deuxième manipulateur selon la recette l'un après l'autre au niveau d'au moins un dispositif de distribution sélectionné ;
- Remplir au moins un aliment à l'aide du distributeur.

13. Procédé selon l'une des revendications 11 à 12, avec au moins une des étapes supplémentaires suivantes :
- Déplacer le récipient de service vers ou dans un poste de distribution pour le rendre disponible pour la distribution à l'utilisateur ;
- Identifier l'utilisateur et libérer le poste de distribution dans lequel se trouve l'aliment attribué à l'utilisateur dans le récipient de service ;
- Nettoyage du récipient de préparation pour une utilisation ultérieure ;

14. Procédé selon l'une des revendications 10 à 13, comprenant au moins l'une des étapes :
- réception d'une commande de préparation d'un repas dans un appareil de contrôle ;
- Sélection d'une recette associée au plat par le dispositif de commande ;
- Sélection d'un récipient de préparation affecté à l'aliment par le dispositif de commande.
